(19) Europäisches Patentamt
European Patent Office
Office européen des brevets

(11) **EP 4 721 908 A1**

(12) **EUROPEAN PATENT APPLICATION**
published in accordance with Art. 153(4) EPC

(43) Date of publication:
08.04.2026 Bulletin 2026/15

(21) Application number: 24876566.1

(22) Date of filing: 10.10.2024

(51) International Patent Classification (IPC):
*B23K 20/12* (2006.01)    *B23K 20/26* (2006.01)

(52) Cooperative Patent Classification (CPC):
B23K 20/12; B23K 20/26

(86) International application number:
PCT/CN2024/123805

(87) International publication number:
WO 2025/077754 (17.04.2025 Gazette 2025/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.10.2023  CN 202322723339 U
11.10.2023  CN 202311308000

(71) Applicant: Anhui World Wide Welding Co., Ltd
Hefei, Anhui 230011 (CN)

(72) Inventors:
• SHU, Xi
  Hefei, Anhui 230011 (CN)
• WAN, Long
  Hefei, Anhui 230011 (CN)
• HUANG, Tifang
  Hefei, Anhui 230011 (CN)

(74) Representative: Chung, Hoi Kan
Mandarin IP Limited
7 Cherry Trees
Great Shelford
Cambridge CB22 5XA (GB)

(54) **CONTROL MECHANISM, SPINDLE SYSTEM AND SPOT WELDING APPARATUS**

(57)    A control mechanism, a spindle system, and a spot welding apparatus are provided. The spot welding apparatus includes a spindle body and a hybrid drive mechanism. The spindle body is provided with a compression sleeve mechanism, which is provided with a stirring sleeve mechanism that is rotatable and capable of axial movement along an axis of the spindle body. The stirring sleeve mechanism is internally and coaxially provided with a stirring pin mechanism that is rotatable and capable of axial movement along the axis of the spindle body. The hybrid drive mechanism includes a stirring pin control mechanism drivingly connected to the stirring pin mechanism and a stirring sleeve control mechanism drivingly connected to the stirring sleeve mechanism, so as to drive the stirring pin mechanism and the stirring sleeve mechanism to perform axial movement along the axis of the spindle body. The spot welding apparatus has relatively large axial forces for plunging and refilling, eliminates the need to reserve space for C-clamp installation, offers greater flexibility, enables spot welding over an unlimited range, and supports automatic tool clamping and unclamping actions, thereby ensuring high efficiency.

FIG. 1

## Description

### CROSS REFERENCE TO RELATED APPLICATIONS

This application claims priority to Chinese Patent Applications No. 202322723339.1, filed on October 11, 2023, and No. 202311308000.3, filed on October 11, 2023, the entire contents of each of which are hereby incorporated by reference.

### TECHNICAL FIELD

The present disclosure relates to the field of spot welding technology, and in particular to control mechanisms, spindle systems, and spot welding apparatuses.

### BACKGROUND

In modern manufacturing, spot welding, as an efficient metal joining technology, is widely used in various fields such as automotive manufacturing, aerospace, and electronics manufacturing. Traditional spot welding apparatuses primarily rely on the simple principle of resistance welding, achieving metal fusion through the intense heat generated by electric current at the metal contact surfaces. Friction stir spot welding is a novel solid-state joining technology developed based on friction stir welding. The solid-state joining technology can create lap joints similar to those produced by resistance spot welding and riveting, thereby offering advantages such as high joint quality, stable welding performance, minimal deformation, and high energy efficiency, and effectively addressing the shortcomings of resistance spot welding and riveting. The emergence of refill friction stir spot welding has successfully resolved the issue of leaving a keyhole at the center of the weld spot after traditional friction stir spot welding. The refill friction stir spot welding enables the production of keyhole-free lap joints with superior mechanical properties in a single operation, featuring high production efficiency and ease of automation. However, with the advancement of material science and the increasing demands of the manufacturing industry, refill friction stir spot welding apparatuses face multiple challenges, including requirements for welding precision, automation level, and equipment reliability.

On one hand, due to the relatively complex structure of refill friction stir spot welding apparatuses, achieving precise control and automated tool clamping and unclamping during the welding process is challenging. On the other hand, when the refill friction stir spot welding apparatus encounters faults, manual troubleshooting is often required, which is not only time-consuming and labor-intensive but also impacts production efficiency.

Therefore, it is desirable to provide a control mechanism, a spindle system, and a spot welding apparatus to achieve precise control and automated tool clamping and unclamping during the welding process.

### SUMMARY

One or more embodiments of the present disclosure provide a control mechanism. The control mechanism includes a driving component, a pipeline, and an actuating component. The driving component forms a sealed circuit with the actuating component via the pipeline, and the sealed circuit is filled with a filling medium. The driving component includes a driving cylinder and a first piston. The actuating component includes an actuating cylinder and a second piston. Movement of the first piston along an axis of the driving cylinder causes a change of a volume of the filling medium within the driving cylinder, and further causes a change of a volume of the filling medium within the actuating cylinder via the sealed circuit. The change of the volume of the filling medium within the actuating cylinder drives the second piston to move along an axis of the actuating cylinder.

One or more embodiments of the present disclosure provide a spindle system. The spindle system includes a spindle body, at least one moving component connected to the spindle body, and at least one control mechanism connected to the spindle body. The control mechanism includes a driving component, a pipeline, and an actuating component. The driving component forms a sealed circuit with the actuating component via the pipeline, and the sealed circuit is filled with a filling medium. The driving component includes a driving cylinder and a first piston. The actuating component includes an actuating cylinder and a second piston. The actuating cylinder is connected to the at least one moving component. Movement of the first piston along an axis of the driving cylinder causes a change of a volume of the filling medium within the driving cylinder, and further causes a change of a volume of the filling medium within the actuating cylinder via the sealed circuit. The change of the volume of the filling medium within the actuating cylinder drives the second piston to move along an axis of the actuating cylinder, and further drives the at least one moving component to move, each of the at least one moving component including at least two movement strokes. Different movement strokes correspond to different actuating actions.

One or more embodiments of the present disclosure provide a spot welding apparatus. The spot welding apparatus includes a spindle body and a hybrid drive mechanism. A compression sleeve mechanism is disposed on the spindle body. A stirring sleeve mechanism is disposed inside the compression sleeve mechanism. A stirring pin mechanism is disposed inside the stirring sleeve mechanism. The hybrid drive mechanism includes a stirring pin control mechanism drivingly connected to the stirring pin mechanism and a stirring sleeve control mechanism drivingly connected to the stirring sleeve mechanism. The stirring pin control mechanism and the stirring sleeve control mechanism are configured to correspondingly drive the stirring pin mechanism and the stirring sleeve mechanism to perform axial movement along an axis of the spindle body. The stirring pin mechanism includes a first tool changing component configured to perform a tool clamping action and a tool unclamping action on a stirring pin when the stirring pin mechanism performs the axial movement along the axis of the spindle body. The stirring sleeve mechanism includes a second tool changing component configured to perform a tool clamping action and a tool unclamping action on a stirring sleeve when the stirring sleeve mechanism performs the axial movement along the axis of the spindle body. The compression sleeve mechanism includes a third tool changing component configured to perform a tool clamping action and a tool unclamping action on a compression sleeve.

Some embodiments of the present disclosure offer at least the following beneficial effects: (1) By implementing a hybrid drive mode, the precision of the servo motor is maintained while achieving greater axial force for plunge and refill through a hydraulic manner. (2) Through robotic arm control, the throat depth limitation of a C-type clamping structure is eliminated, eliminating the need to reserve space for its installation, offering high degrees of freedom and enabling spot welding operations across an unlimited range. (3) The stirring pin mechanism includes a first tool changing component for automatic pin replacement, the stirring sleeve mechanism includes a second tool changing component for automatic sleeve replacement, and the compression sleeve mechanism includes a third tool changing component for automatic compression sleeve replacement. These automatic tool changing components enable automated tool clamping and unclamping, eliminating the need for manual intervention, thereby increasing efficiency and making the system suitable for mass-production spot welding lines. Moreover, the design of the automatic tool changing components is simple, rational, and easy to implement, with low production costs. (4) The control system can utilize a single circuit (i.e., the sealed circuit formed by the driving component, the pipeline, and the actuating component) to control the motion of at least one moving component and enable it to perform at least two actuating actions, with different actuating actions corresponding to different movement strokes. Applying this control mechanism to the field of spot welding allows a single circuit to control the axial actions of the welding tool during welding and during tool clamping and unclamping, achieving high axial plunge and refill forces through hydraulic means while maintaining the precision of the servo motor. Furthermore, the fill medium (e.g., gas or hydraulic oil) within the circuit is sealed. During actual welding operations, the servo motor drives the process, while the sealed medium acts as the transmission medium, ensuring high precision and stability.

## BRIEF DESCRIPTION OF THE DRAWINGS

The present disclosure is further described by way of exemplary embodiments. These exemplary embodiments are described in detail with reference to the accompanying drawings. These embodiments are not limiting. In these embodiments, the same reference numerals denote the same structures, wherein:

FIG. 1 is a schematic diagram illustrating an exemplary structure of a spot welding apparatus according to some embodiments of the present disclosure.
FIG. 2 is a schematic diagram illustrating an exemplary internal structure of a spindle body according to some embodiments of the present disclosure.
FIG. 3 is a schematic diagram illustrating another exemplary internal structure of the spindle body according to some embodiments of the present disclosure.
FIG. 4 is a schematic diagram illustrating an exemplary structure of a hybrid drive mechanism according to some embodiments of the present disclosure.
FIG. 5 is a schematic diagram illustrating an exemplary structure of a first power component and a second power component according to some embodiments of the present disclosure.
FIG. 6 is a schematic diagram illustrating an exemplary structure of a spindle body according to some embodiments of the present disclosure.
FIG. 7 is a schematic diagram illustrating an exemplary time sequence of welding work and tool changing according to some embodiments of the present disclosure.

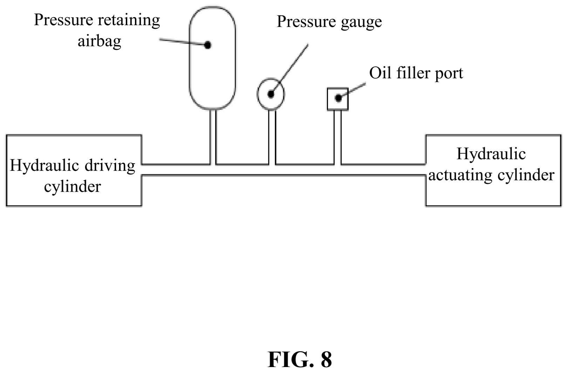

FIG. 8 is a schematic diagram illustrating an exemplary hydraulic driving cylinder and an exemplary hydraulic actuating cylinder according to some embodiments of the present disclosure.

The reference numerals denote: 100 represents a robotic arm; 200 represents a media supply manifold; 300 represents a hybrid drive mechanism; 310 represents a stirring pin control mechanism; 320 represents a stirring sleeve control mechanism; 311 represents a first power component; 312 represents a first driving component; 313 represents a first pipeline; 314 represents a first actuating component; 321 represents a second power component; 322 represents a second driving component; 323 represents a second pipeline; 324 represents a second actuating component; 311-1 represents a first drive motor; 311-2 represents a first speed reducer; 311-3 represents a first electric cylinder; 321-1 represents a second drive motor; 321-2 represents a second speed reducer; 321-3 represents a second electric cylinder; 400 represents a spindle body; 410 represents a spindle wiring port; 420 represents a water circuit interface; 431 represents a first interface; 432 represents a second interface; 440 represents a signal wire junction box; 450 represents a displacement sensor;

451 represents a first displacement sensor; 452 represents a second displacement sensor; 461 represents a cooling gas inlet; 462 represents a first medium inlet; 463 represents a second medium inlet; 500 represents a stirring pin mechanism; 510 represents a first tool changing component; 511 represents a first spring assembly; 512 represents a first limit assembly; 520 represents a first connecting rod; 530 represents a first bearing; 531 represents a first spindle; 540 represents a first module housing; 550 represents a housing connector; 560 represents a pull claw; 570 represents a first tool holder; 580 represents a stirring pin; 600 represents a stirring sleeve mechanism; 610 represents a second tool changing component; 611 represents a second spring assembly; 612 represents a second limit assembly; 621 represents a second spindle; 620 represents a second bearing; 630 represents a second module housing; 640 represents a first support assembly; 650 represents a second tool holder; 660 represents stirring sleeve; 700 represents a compression sleeve mechanism; 710 represents a third module housing; 720 represents a second support assembly; 730 represents a third tool holder; 740 represents a compression sleeve.

## DETAILED DESCRIPTION

In the following detailed description, numerous specific details are set forth by way of examples in order to provide a thorough understanding of the relevant disclosure. Obviously, drawings described below are only some examples or embodiments of the present disclosure. Those skilled in the art, without further creative efforts, may apply the present disclosure to other similar scenarios according to these drawings. It should be understood that the purposes of these illustrated embodiments are only provided to those skilled in the art to practice the application, and not intended to limit the scope of the present disclosure. Unless obviously obtained from the context or the context illustrates otherwise, the same numeral in the drawings refers to the same structure or operation.

In the prior art, techniques related to refill friction stir spot welding may be referenced in patent documents with publication numbers CN105364298A, CN108817641A, CN108857044A, CN114273772A, CN105665917A, and CN108213690A. The friction stir spot welding apparatuses disclosed in the aforementioned patent documents all control the vertical movement of the stirring pin and stirring sleeve via servo motors, employing an off-axis drive configuration. This drive approach involves significant bending moments, results in a large overall volume, and provides limited output force. Among these, in the patent document with publication number CN108213690A, the friction stir transmission is achieved through a rack-and-pinion mechanism, while the others utilize lead screw mechanisms for transmission.

Furthermore, for example, in patent documents with publication numbers CN111069762A, CN111069763A, CN107511583A, CN109202264A, and CN206405600U, the bottom of the spot welding apparatuses all feature a C-clamp structure or a C-clamp-like structure. Due to the limitation imposed by the throat depth of this structure, requirements are placed on the location of weld spots, necessitating that weld spots be positioned at edges of a workpiece. Additionally, space must be reserved at the bottom of the workpiece to accommodate the C-clamp to prevent interference. Although the apparatus in CN109202264A employs a robot configuration, the robot serves primarily a handling function, and the device essentially retains the C-clamp structure. Moreover, none of the spot welding apparatuses in the aforementioned published patent documents possess an automatic tool clamping and unclamping function. Manual tool clamping and unclamping for the stirring pin, stirring sleeve, and compression sleeve is employed, resulting in low efficiency and high demands on operator skill.

Based on the above, embodiments of the present disclosure provide a spot welding apparatus capable of achieving precise control of the welding process and automated tool clamping and unclamping.

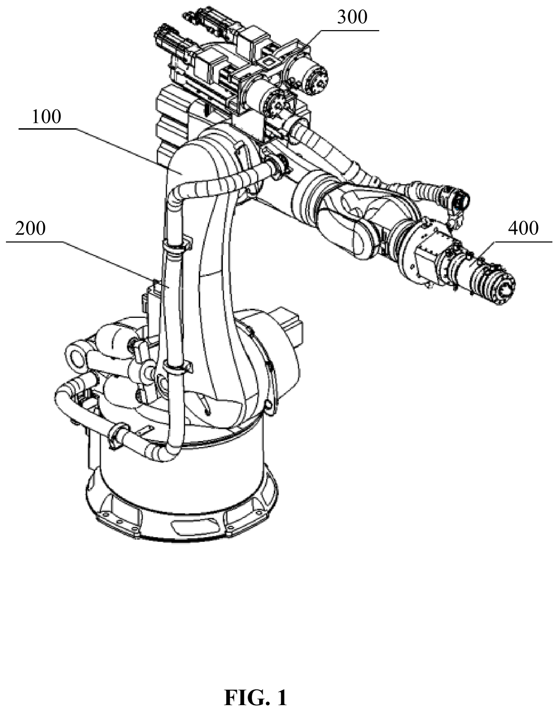

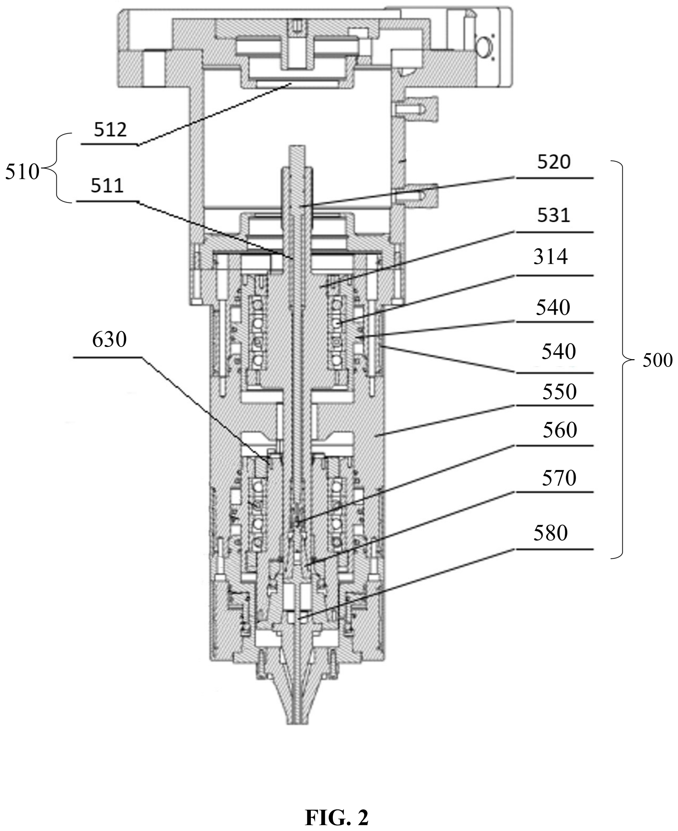

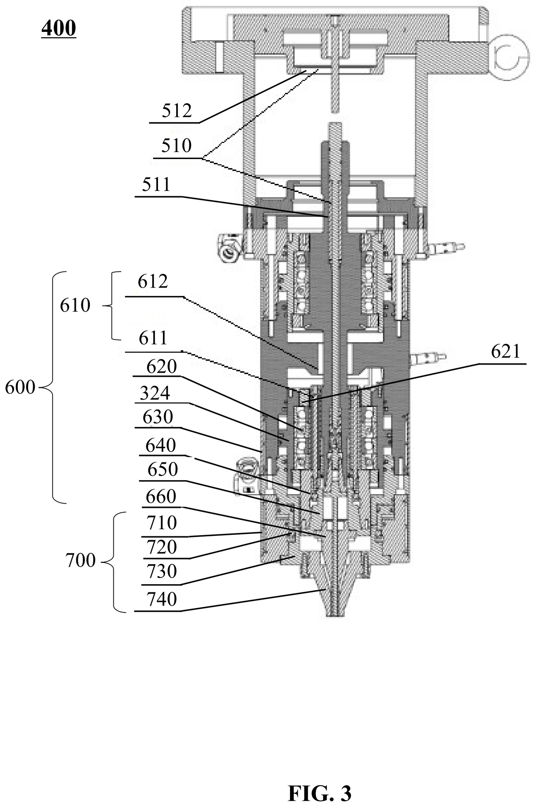

FIG. 1 is a schematic structural diagram of a spot welding apparatus according to some embodiments of the present disclosure; FIG. 2 is a schematic diagram of an internal structure of a spindle body according to some embodiments of the present disclosure; FIG. 3 is another schematic diagram of the internal structure of the spindle body according to some embodiments of the present disclosure.

In some embodiments, as shown in FIG. 1, the spot welding apparatus includes a spindle body 400 and a hybrid drive mechanism 300.

The spindle body 400 is a structure for mounting the main components of the spot welding apparatus. In some embodiments, the spindle body 400 may be an electric spindle or a mechanical spindle. In some embodiments, a spindle is rotatably connected coaxially inside the spindle body 400, and the spindle body 400 is connected to a power source for driving the rotation of the spindle.

In some embodiments, the power source for providing the rotational power required by the spindle inside the spindle body 400 is preferably a servo motor. During operation, the power source supplies power to the spindle inside the spindle body 400, causing the spindle inside the spindle body 400 to drive a spindle connected to a stirring pin and a spindle connected to a stirring sleeve to rotate together relative to an axis of the spindle body 400, thereby driving the stirring pin and the stirring sleeve to rotate together relative to the compression sleeve.

In some embodiments, as shown in FIG. 1, a compression sleeve mechanism 700 is disposed on the spindle body 400. A stirring sleeve mechanism 600 is disposed inside the compression sleeve mechanism 700, and a stirring pin mechanism 500 is disposed inside the stirring sleeve mechanism 600. The stirring sleeve mechanism 600 connected inside the compression sleeve mechanism 700 is rotatable and capable of axial movement along the axis of the spindle body 400. The stirring pin mechanism 500 coaxially connected inside the stirring sleeve mechanism 600 is rotatable and capable of axial movement along the axis of the spindle body 400. The hybrid drive mechanism 300 includes a stirring pin control mechanism 310 drivingly connected to the stirring pin mechanism 500 and a stirring sleeve control mechanism 320 drivingly connected to the stirring sleeve mechanism 600. The stirring pin control mechanism 310 and the stirring sleeve control mechanism 320 are configured to correspondingly drive the stirring pin mechanism 500 and the stirring sleeve mechanism 600 to perform axial movement along the axis of the spindle body 400.

The stirring pin mechanism 500 is a mechanism for driving the movement of a stirring pin 580. In some embodiments, the stirring pin mechanism 500 may include the stirring pin and a spindle connected to the stirring pin. In some embodiments, the spindle connected to the stirring pin may be connected to the hybrid drive mechanism 300 to move axially under the action of the hybrid drive mechanism 300. Further description regarding the stirring pin 580 may be found in FIG. 2 and its related description.

In some embodiments, the stirring pin mechanism 500 includes a first tool changing component 510. During axial movement of the stirring pin mechanism 500, a tool clamping action and a tool unclamping action are automatically performed under an action of the first tool changing component 510. The first tool changing component 510 refers to a component within the stirring pin mechanism 500 that participates in the action of changing the stirring pin 580. Further description regarding the stirring pin mechanism 500 and the first tool changing component 510 may be found in FIG. 2 and its related description.

The stirring sleeve mechanism 600 is a mechanism for supporting the stirring pin 580. In some embodiments, an interior of the stirring sleeve mechanism 600 may be hollow, and the stirring sleeve mechanism 600 is coaxially sleeved outside the stirring pin mechanism 500. In some embodiments, the stirring sleeve mechanism 600 may include a stirring sleeve and a spindle connected to the stirring sleeve. The stirring sleeve is coaxially sleeved outside the stirring pin mechanism 500. In some embodiments, the spindle connected to the stirring sleeve may be connected to the hybrid drive mechanism 300 to move axially under the action of the hybrid drive mechanism 300.

In some embodiments, the stirring sleeve mechanism 600 includes a second tool changing component 610. During axial movement of the stirring sleeve mechanism 600, an automatic tool clamping and unclamping action is performed under an action of the second tool changing component 610. Further description regarding the stirring sleeve mechanism 600 and the second tool changing component 610 may be found in FIG. 3 and its related description.

The compression sleeve mechanism 700 is a mechanism for clamping a workpiece to be welded. During welding, the compression sleeve mechanism 700 abuts against the workpiece to be welded, does not rotate, and clamps and secures the workpiece to be welded. In some embodiments, the compression sleeve mechanism 700 may include a compression sleeve. The compression sleeve may be a ring structure sleeved outside the stirring sleeve mechanism 600. For example, the compression sleeve may be a structure such as a retaining ring.

In some embodiments, the compression sleeve mechanism 700 includes a third tool changing component. When the third tool changing component moves axially along the axis of the spindle body 400, it automatically performs a tool clamping and unclamping action. In some embodiments, the third tool changing component may be connected to the hybrid drive mechanism 300 to move axially under the action of the hybrid drive mechanism 300. Further description regarding the compression sleeve mechanism 700 and the third tool changing component may be found in FIG. 3 and its related description.

The stirring pin control mechanism 310 refers to a component that drives the stirring pin 580 to move axially along the axis of the spindle body 400. The stirring sleeve control mechanism 320 refers to a component that drives the stirring sleeve 660 to move axially along the axis of the spindle body 400.

In some embodiments, the stirring pin control mechanism 310 and the stirring sleeve control mechanism 320 may include a lead screw, a lead screw nut mating with the lead screw, a power source, etc. The lead screw may be arranged parallel to the spindle body 400. During operation of the stirring pin control mechanism 310 and the stirring sleeve control mechanism 320, the power source provides power to the corresponding lead screw, causing the lead screw to rotate relative to the spindle body 400, thereby driving the spindle connected to the stirring pin or the spindle connected to the stirring sleeve to move axially along the spindle body 400, and driving the stirring pin connected to the spindle or the stirring sleeve connected to the spindle to move axially. This configuration achieves the plunging and retracting of the stirring pin or the stirring sleeve. In some embodiments, the power source may be at least one of a pneumatic cylinder, a hydraulic cylinder, and an electric motor, or any combination thereof.

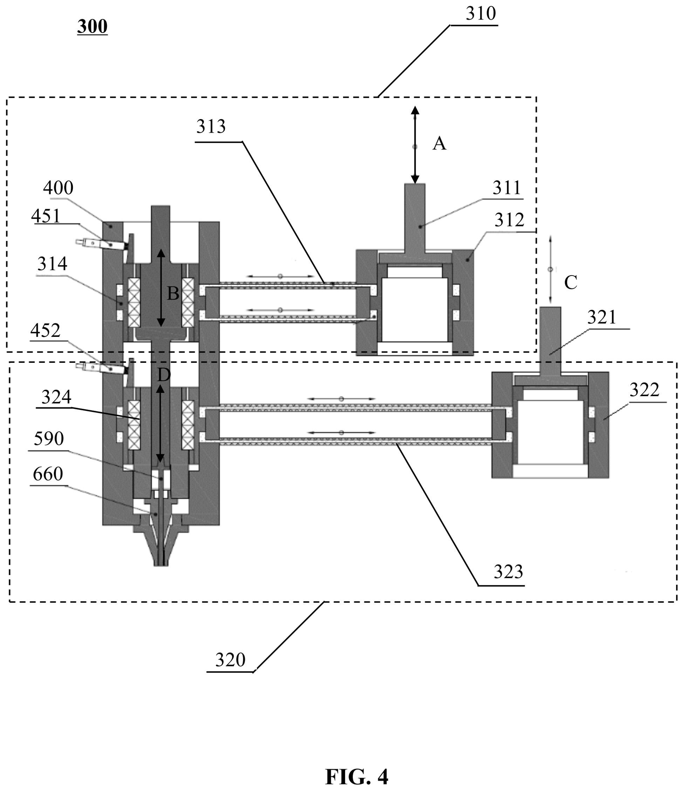

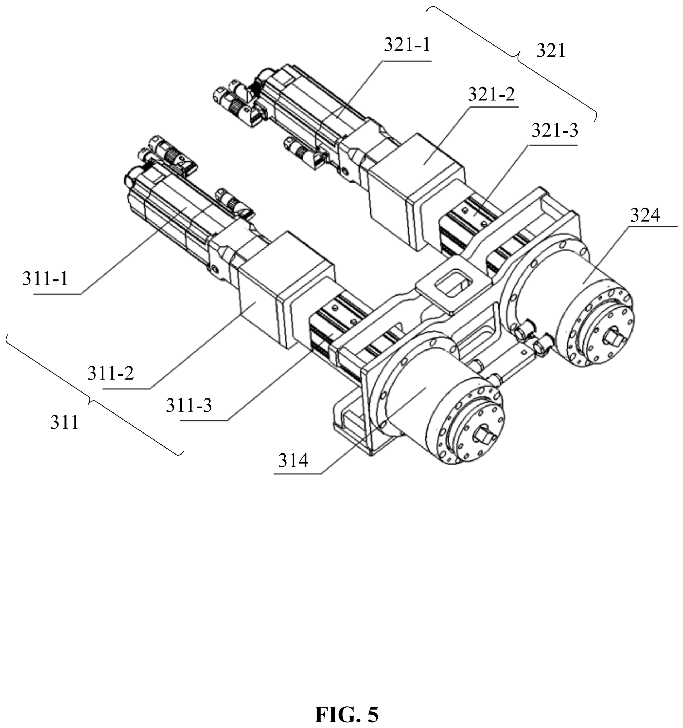

Since two control components are employed to drive the axial movement of the stirring pin and the stirring sleeve, respectively, their axial motions are independent of each other. In practical use, an axial displacement of the stirring pin and the stirring sleeve can be arbitrarily adjusted according to actual needs, featuring high positioning accuracy, clear division of tasks, and ease of maintenance. Additionally, by utilizing two separate power sources to provide the driving force for the axial movement of the stirring pin and the stirring sleeve, the power transmission system is simplified, power delivery is stable, welding performance is improved, and the service life is extended. Further details regarding the stirring pin control mechanism 310 and the stirring sleeve control mechanism 320 may be found in FIGs. 4 and 5, and their associated descriptions.

An operation process of the spot welding apparatus provided by some embodiments of the present disclosure mainly includes:

At the start of welding, the hybrid drive mechanism 300 drives the stirring sleeve mechanism 600 and the stirring pin mechanism 500 to begin synchronized rotation, which generates frictional heat upon contact with the workpiece to be welded, thereby softening the material to a plastic state.

During the welding process, a first power component 301 drives the stirring pin 580 to perform axial movement along the axis of the spindle body 400, and a second power component 302 drives the stirring sleeve 660 to perform axial movement along the axis of the spindle body 400. By repeatedly driving a welding tool to plunge and refill, high-quality weld spots are formed on a surface of the workpiece to be welded.

When tool change or tool clamping and unclamping is required, the hybrid drive mechanism 300 drives at least one of the first tool changing component 510, the second tool changing component 610, and the third tool changing component to perform a tool clamping and unclamping action. Further details regarding tool clamping and unclamping may be found in FIG. 4 and its associated description.

The spot welding apparatus provided by the embodiments of the present disclosure is suitable for refill friction stir spot welding and can also be used for keyhole-free friction stir welding, enabling the function of spindle retraction. For example, after the stirring sleeve plunges into the material, the stirring pin retracts, allowing material to flow into a cavity created by the pin retraction. Then, the spindle advances to perform friction stir welding. At the end of welding, the stirring sleeve retracts upward while the stirring pin refills downward, ultimately achieving keyhole-free friction stir welding. Using the spot welding apparatus provided by the embodiments of the present disclosure, defect repair can be performed. For example, if there is a defect on the material surface, the defective area can be machined away, filled with the same material, and subsequently welded at that location using the refill friction stir spot welding manner, thereby achieving defect repair.

The spot welding apparatus provided by the embodiments of the present disclosure can also be used to prepare aluminum/copper electrodes. In an aluminum/copper sheet lap joint configuration with aluminum on top and copper underneath, the welding tool plunges through the aluminum sheet to reach the copper sheet surface for keyhole-free spot welding. After welding, the remaining material can be removed to obtain the prepared aluminum/copper electrode. The spot welding apparatus provided by the embodiments of the present disclosure can also facilitate aluminum/copper electrode preparation by utilizing the common annular groove defect. Specifically, by controlling the welding process so that the weld spot after the aluminum/copper lap joint welding possesses an annular groove defect. After welding, the remaining material can be easily removed, resulting in an effective weld only between the aluminum alloy and the copper substrate at the circular weld spot location. The aluminum/copper electrode can then be obtained after subsequent processing.

In some embodiments, as shown in FIG. 1, the spot welding apparatus further includes a robotic arm 100 and a media supply manifold 200. The spindle body 400 and the hybrid drive mechanism 300 are mounted on the robotic arm 100.

The robotic arm 100 is a component for moving the spindle body 400 and the hybrid drive mechanism 300. The robotic arm 100 may be of various types. For example, the robotic arm 100 may be a four-axis robotic arm, a six-axis robotic arm, or the like. In some embodiments, the robotic arm 100 may perform positional control of the spindle body 400, allowing the spot welding location to be unconstrained, offering a higher degree of freedom. This enables welding operations at different positions and angles over an essentially unlimited range.

In some embodiments, the spindle body 400 is detachably connected to the robotic arm 100. For example, the spindle body 400 may be detachably connected to the robotic arm 100 via flange bolts engaging with a connection flange, facilitating replacement of the spindle body.

The media supply manifold 200 includes a pipeline for supplying gas or oil. In some embodiments, the media supply manifold 200 may include a gas supply pipeline and/or an oil supply pipeline. In some embodiments, the media supply manifold 200 (e.g., an oil supply pipeline) may supply oil to the spindle body 400 to drive the motion of a hydraulic cylinder within the spindle body 400. In some embodiments, the media supply manifold 200 (e.g., a gas supply pipeline) may introduce gas into the spindle body 400 to drive the motion of a pneumatic cylinder within the spindle body 400.

The robotic arm 100 and the media supply manifold 200 are common devices in the prior art and therefore will not be elaborated further.

The spot welding apparatus provided by the embodiments of the present disclosure, through control by the robotic arm, eliminates the throat depth limitation inherent in C-clamp structures, removing the need to reserve installation space for such a clamp. This results in a high degree of freedom, enabling spot welding operations over an unlimited range and freeing the weld spot location from constraints.

In some embodiments, as shown in FIG. 2, the stirring pin mechanism 500 includes a first bearing 530 and a first module housing 540. A first spindle 531 is mounted on an inner ring of the first bearing 530. A first connecting rod 520 extends through an interior of the first spindle 531 along a central axis of the first spindle 531. A lower end of the first connecting rod 520 is connected to a first tool holder 570 via a pull claw 560, and a lower end of the first tool holder 570 is connected to the stirring pin 580. The first spindle 531, the first connecting rod 520, the pull claw 560, the first tool holder 570, and the stirring pin 580 collectively form a stirring pin moving assembly. The stirring pin moving assembly is a combination of movable components within the stirring pin mechanism 500.

The first module housing 540 is a structure that accommodates the stirring pin mechanism 500. In some embodiments, the first bearing 530 is disposed inside the first module housing 540.

The first bearing 530 is a component for reducing rotational friction. In some embodiments, a plurality of first bearings 530 may be provided and axially sleeved onto an exterior of the first spindle 531. Since a first actuating component 314 provides only axial displacement force and does not rotate with the stirring pin mechanism 500, the inclusion of the first bearing 530 reduces friction between the first spindle 531 and the first actuating component 314 when the first spindle 531 rotates with the first connecting rod 520, thereby extending the service life of the spot welding apparatus.

The first spindle 531 is a component configured to drive the first connecting rod 520 and the pull claw 560 mounted thereon for axial movement. When a piston of the first actuating component 314 moves axially, the first spindle 531 is driven to move axially accordingly, thereby driving the first connecting rod 520 to move axially.

The lower end of the first connecting rod 520 is connected to the first tool holder 570 via the pull claw 560. The pull claw 560 is used to connect the first tool holder 570. In some embodiments, when the first connecting rod 520 moves axially along with the first spindle 531, the pull claw 560 moves axially along with the first connecting rod 520.

The pull claw 560 has two states: open and closed. When the pull claw 560 is open, the first tool holder 570 is released from the grip of the pull claw 560 and detaches from the first connecting rod 520. When the pull claw 560 is closed, the first tool holder 570 is secured to the first connecting rod 520 by the pull claw 560. When the first connecting rod 520 moves axially along with the first spindle 531 and the pull claw 560 is closed, the first tool holder 570 moves axially along with the first connecting rod 520.

The first tool holder 570 is used to connect the stirring pin 580. In some embodiments, a top end of the first tool holder 570 is positioned inside the first spindle 531 and connected to the lower end of the first connecting rod 520. In some embodiments, a bottom end of the first tool holder 570 is connected to an adapter for clamping the stirring pin 580, thereby connecting to the stirring pin 580 via the adapter. When the first connecting rod 520 moves axially along with the first spindle 531 and the pull claw 560 is closed, the first tool holder 570 moves axially following the first connecting rod 520, thereby driving the stirring pin 580 to move axially.

The stirring pin 580 is a welding material used for friction stir welding, such as a welding rod. In some embodiments, the stirring pin 580 includes a connection head at a top end of the stirring pin 580 and a welding rod at a bottom end of the stirring pin 580. The connection head is clamped within the first tool holder 570, and the welding rod extends through the stirring sleeve mechanism 600 and the compression sleeve mechanism 700 to an exterior of the spot welding apparatus.

In some embodiments, as shown in FIG. 2, the first tool changing component 510 includes a first spring assembly 511 and a first limit assembly 512. The first spring assembly 511 is sleeved over the first connecting rod 520 and located inside the first spindle 531. Two ends of the first spring assembly 511 are fixedly connected to the first spindle 531 and the first connecting rod 520, respectively. Specifically, an upper end (i.e., a fixed end) of the first spring assembly 511 is fixedly connected to the first spindle 531, and a lower end (i.e., a movable end) of the first spring assembly 511 is fixedly connected to the first connecting rod 520. The first limit assembly 512 is disposed above the first connecting rod 520 and is spaced apart from the first connecting rod 520 by a movable distance.

In some embodiments, when performing tool clamping and unclamping on the stirring pin 580, the stirring pin moving assembly is controlled to move axially upward. After a top end of the first connecting rod 520 contacts the first limit assembly 512, the first connecting rod 520 and the pull claw 560 stop moving axially upward. However, the first spindle 531 continues to move axially upward, causing the first connecting rod 520 and the pull claw 560 to move axially downward relative to the first spindle 531. Consequently, an upper end of the first spring assembly 511 moves toward its lower end, compressing the first spring assembly 511. This action opens the pull claw 560, releasing the first tool holder 570 from the pull claw 560 and causing the stirring pin 580 to detach from the stirring pin mechanism 500, thereby achieving a tool release action. After a new stirring pin is in position (i.e., tool change is complete), when the stirring pin moving assembly moves axially downward, a lower end of the first spring assembly 511 moves away from its upper end, stretching the first spring assembly 511. This action closes the pull claw 560, achieving a tool clamping action.

In some embodiments, an annular gap exists between the first spindle 531 and the inner ring of the first bearing 530, allowing the first spindle 531 to be driven axially upward by the first actuating component 314.

Due to the action of a first sealed circuit, the first spindle 531, the first connecting rod 520, the pull claw 560, the first tool holder 570, and the stirring pin 580 (which collectively form the stirring pin moving assembly) move axially upward together. When the first connecting rod 520 and the pull claw 560 move downward relative to the first spindle 531, the first spring assembly 511 is compressed. Under the action of the first sealed circuit, when the first spindle 531 moves axially downward, the compression state of the first spring assembly 511 is gradually relieved. The spring force then drives the first spindle 531 to continue moving axially downward. When the first spring assembly 511 returns to an initial state (i.e., a state before the first connecting rod 520 and pull claw 560 contact the first limit assembly 512) and the stirring pin mechanism 500 continues to move axially downward, the first spring assembly 511 is stretched.

In some embodiments, the first spring assembly 511 may be implemented in various forms, such as a coil spring, a gas spring, an elastic rubber component, or the like.

In some embodiments, one first spring assembly 511 may be provided, and the first spring assembly 511 abuts against an upper portion of the first connecting rod. In some embodiments, a plurality of first spring assemblies 511 may be provided to increase the elastic force of the first spring assembly 511. The embodiments of the present disclosure do not limit the count of the elastic member 122. In some embodiments, the plurality of first spring assemblies 511 may be connected in a nested, series, or parallel configuration. In some embodiments, the plurality of first spring assemblies 511 may be arranged at intervals along an extending direction of the first connecting rod 520.

The first limit assembly 512 is a component used to restrict a movement range of the first connecting rod 520. When the first connecting rod 520 abuts against the first limit assembly 512, the first limit assembly 512 may stop the movement of the first connecting rod 520. For example, the first limit assembly 512 may be a columnar member whose top end is fixed to an internal structure of the spindle body 400.

In some embodiments, when the first spring assembly 511 is in a natural state, the first limit assembly 512 is spaced apart from the first connecting rod 520 by a movable distance. In some embodiments, when the first spring assembly 511 is in the natural state, a maximum distance between the top end of the first connecting rod 520 and the first limit assembly 512 is less than a maximum stroke of the first actuating component 314. This configuration ensures that when the first actuating component 314 drives the first connecting rod 520 upward until the top end of the first connecting rod 520 abuts against a bottom end of the first limit assembly 512, the first actuating component 314 can continue to drive the first spindle 531 upward, such that the first spring assembly 511 is compressed, thereby causing axial misalignment between the first connecting rod 520 and the first spindle 531, with the first spindle 531 moving upward relative to the first connecting rod 520 and the pull claw 560.

In some embodiments, as shown in FIG. 3, the stirring sleeve mechanism 600 includes a second bearing 620 and a second module housing 630. A second spindle 621 is mounted on an inner ring of the second bearing 620. The second spindle 621 is disposed outside the first spindle 531. An upper end of the second spindle 621 is provided with a second connecting rod, and a lower end of the second spindle 621 is connected to a second tool holder 650 via a first support assembly 640. A lower end of the second tool holder 650 is connected to the stirring sleeve 660, and the stirring pin 580 extends through the stirring sleeve 660. The second spindle 621, the second connecting rod, the second tool holder 650, the stirring sleeve 660, and the first support assembly 640 collectively form a stirring sleeve moving assembly. The stirring sleeve moving assembly is a combination of movable components within the stirring sleeve mechanism 600.

The second module housing 630 is a structure that accommodates the stirring sleeve mechanism 600. In some embodiments, the second bearing 620 is disposed inside the second module housing 630.

In some embodiments, a top of the second module housing 630 may be connected to a bottom of the first module housing 540. In some embodiments, the second module housing 630 and the first module housing 540 may be connected via a housing connector 550.

In some embodiments, a limiting structure is provided inside the second module housing 630 to restrict an axial movement range of the second actuating component 324.

The second bearing 620 is a component for reducing rotational friction. In some embodiments, a plurality of second bearings 620 may be axially sleeved onto an exterior of the second spindle 621. Since the second actuating component 324 provides only axial displacement force and does not rotate with the stirring sleeve mechanism 600, the inclusion of the second bearing 620 reduces friction between the second spindle 621 and the second actuating component 324 when the second spindle 621 rotates with the second connecting rod, thereby extending the service life of the spot welding apparatus.

The second spindle 621 is a component configured to drive the second connecting rod and the first support assembly 640 mounted thereon for axial movement. When a piston of the second actuating component 324 moves axially, the second spindle 621 is driven to move axially accordingly, thereby driving the second connecting rod to move axially.

The upper end of the second spindle 621 is provided with a second connecting rod, and the lower end of the second spindle 621 is connected to a second tool holder 650 via the first support assembly 640. In some embodiments, when the second connecting rod moves axially along with the second spindle 621, the first support assembly 640 moves axially along with the second connecting rod.

The first support assembly 640 is used to connect the second tool holder 650. The first support assembly 640 may be of various structural forms. For example, the first support assembly 640 may be a support assembly composed of multiple support balls. In some embodiments, the second tool holder 650 may be detachably fixed to the second spindle 621 via the first support assembly 640. For example, the second tool holder 650 may be snap-fitted onto the second spindle 621 via the first support assembly 640. When a gap between the first support assembly 640 and the second spindle 621 is relatively large, the second tool holder 650 disengages from the first support assembly 640 (or from the second spindle 621). When the first support assembly 640 tightly abuts the second spindle 621, the second tool holder 650 is secured between the first support assembly 640 and the second spindle 621.

The second tool holder 650 is a component for clamping and securing the stirring sleeve 660. In some embodiments, a top of the second tool holder 650 is connected to the second spindle 621 via the first support assembly 640, and a bottom of the second tool holder 650 is connected to the stirring sleeve 660.

The stirring sleeve 660 is a component that protects the stirring pin 580. In some embodiments, a top end of the stirring sleeve 660 is clamped by the second tool holder 650, and a bottom end of the stirring sleeve 660 is located within the compression sleeve 740. By having the stirring pin 580 extend through the stirring sleeve 660, a lower end of the stirring pin 580 is enveloped, ensuring that the stirring pin 580 does not bend under load.

In some embodiments, a contact surface between the stirring sleeve 660 and the compression sleeve 740 and a contact surface between the stirring sleeve 660 and the stirring pin 580 are configured as mirror surfaces with a surface roughness less than a preset value, such as 0.08 μm, to reduce friction generated during the rotation of the stirring sleeve 660.

In some embodiments, as shown in FIG. 3, the stirring sleeve mechanism 600 includes a second tool changing component 610. The second tool changing component 610 refers to a component within the stirring sleeve mechanism 600 that participates in the action of changing the stirring sleeve 660. In some embodiments, the second tool changing component 610 may cause axial misalignment between the second connecting rod and the second spindle 621, separating the second spindle 621 from the second tool holder 650, thereby achieving the release of the stirring sleeve 660.

As shown in FIG. 3, in some embodiments, the second tool changing component 610 includes a second spring assembly 611 and a second limit assembly 612. The second spring assembly 611 is sleeved onto the second spindle 621, and a lower end of the second spring assembly 611 is connected to the second spindle 621.

The second limit assembly 612 is disposed above the second connecting rod.

In some embodiments, when performing tool clamping and unclamping on the stirring sleeve 660, the stirring sleeve moving assembly is controlled to move axially upward along an axial direction of the spindle body. After a top of the second connecting rod contacts the second limit assembly, the second connecting rod and the first support assembly 640 stop moving axially upward. However, the second spindle 621 continues to move axially upward, causing the second connecting rod and the first support assembly 640 to move axially downward relative to the second spindle 621. Consequently, the lower end of the second spring assembly 611 moves toward an upper end of the second spring assembly 611, compressing the second spring assembly 611. This action releases the first support assembly 640, causing the second tool holder 650 to detach from the first support assembly 640, thereby achieving a tool release action. After a new stirring sleeve 660 is in position, when the stirring sleeve moving assembly moves axially downward, the lower end of the second spring assembly 611 moves away from its upper end, stretching the second spring assembly 611. This action closes the first support assembly 640, achieving a tool clamping action, and reconnects the second tool holder 650 and the first support assembly 640.

In some embodiments, an annular gap exists between the second spindle 621 and the inner ring of the second bearing 620, allowing the second spindle 621 to be driven axially upward by the second actuating component 324.

Due to the action of a stirring sleeve hydraulic circuit, the second spindle 621, the second connecting rod, the first support assembly 640, the second tool holder 650, and the stirring sleeve 660 move axially upward together. When the second connecting rod and the first support assembly 640 move downward relative to the second spindle 621, the second spring assembly 611 is compressed. Under the action of a stirring pin hydraulic circuit, when the second spindle 621 moves axially downward, the compression state of the second spring assembly 611 is gradually relieved. The spring force then drives the second spindle 621 to continue moving axially downward. When the second spring assembly 611 returns to its initial state (i.e., a state before the second connecting rod contacts the second limit assembly 612) and the stirring sleeve mechanism 600 continues to move axially downward, the second spring assembly 611 is stretched.

In some embodiments, the second spring assembly 611 may be implemented in various forms, such as a coil spring, a gas spring, an elastic rubber component, or the like. In some embodiments, one or more second spring assemblies 611 may be provided.

The second limit assembly 612 is a component configured to restrict a movement range of the second connecting rod. When the top of the second connecting rod abuts against the second limit assembly 612, the second limit assembly 612 can stop the movement of the second connecting rod. The structure of the second limit assembly 612 is similar to that of the first limit assembly 512, and thus will not be elaborated further here.

In some embodiments, as shown in FIG. 3, the compression sleeve mechanism 700 includes a third module housing 710, which is connected to the second module housing 630. A third tool changing component is disposed inside the third module housing 710. The third tool changing component includes a second support assembly 720. A lower end of the second support assembly 720 is provided with a third tool holder 730, and a lower end of the third tool holder 730 is connected to the compression sleeve 740. The compression sleeve 740 is sleeved over the stirring pin 580 and the stirring sleeve 660.

In some embodiments, when performing tool clamping and unclamping on the compression sleeve 740, the second support assembly 720 is controlled to move, releasing the third tool holder 730 from the second support assembly 720, thereby achieving a tool release action. After a new compression sleeve 740 is in position, the second support assembly 720 resets and engages the third tool holder 730, achieving a tool clamping action.

The third module housing 710 is a structure that accommodates the compression sleeve mechanism 700. In some embodiments, the third module housing 710 contains the third tool-changing component, the third tool holder 730, and the compression sleeve 740. In some embodiments, a top of the third module housing 710 can be connected to a bottom of the second module housing 630.

The third tool changing component refers to a component within the compression sleeve mechanism 700 that participates in the action of changing the compression sleeve 740. In some embodiments, the third tool changing component may be driven by a drive motor (e.g., a servo motor, an electric cylinder, etc.) to engage with or disengage from the third tool holder 730, thereby achieving connection or release of the compression sleeve 740. In some embodiments, the third tool changing component may be driven by a pneumatic mechanism or a hydraulic mechanism.

The second support assembly 720 is used to connect the third tool holder 730. The second support assembly 720 may be configured in various structural forms. For example, the second support assembly 720 may be a support assembly composed of multiple support balls. In some embodiments, the third tool holder 730 may be detachably fixed to the third module housing 710 via the second support assembly 720. In some embodiments, when the compression sleeve 740 needs to be changed, the drive motor may control the second support assembly 720 to move axially, thereby controlling the second support assembly 720 to release or grip the third tool holder 730.

In some embodiments, the second support assembly 720 may be driven by a pneumatic mechanism or a hydraulic mechanism to achieve axial movement. In some embodiments, the compression sleeve mechanism 700 is connected to a compression sleeve pneumatic circuit, and the second support assembly 720 may achieve axial movement under the action of the compression sleeve pneumatic circuit. Further description regarding the compression sleeve pneumatic circuit may be found in the related sections below.

The third tool holder 730 is a component for clamping and securing the compression sleeve 740. In some embodiments, a top of the third tool holder 730 is connected to the lower end of the second support assembly 720, and a bottom of the third tool holder 730 is connected to the compression sleeve 740.

The compression sleeve 740 is a component on the spot welding apparatus used to clamp the workpiece to be welded. In some embodiments, the compression sleeve 740 may be fixedly connected to the third tool holder 730. For example, the compression sleeve 740 may be fixedly connected to the third tool holder 730 through bolting, integral molding, or the like. In some embodiments, the compression sleeve 740 may be snap-fitted onto the third module housing 710 to secure the compression sleeve 740 to the third module housing 710 in a non-rotating manner. For example, the compression sleeve 740 may be snap-fitted onto the third module housing 710 through manners such as groove engagement, or the like.

It should be noted that the stirring pin mechanism 500, the stirring sleeve mechanism 600, and the compression sleeve mechanism 700 may either simultaneously perform the tool clamping action and the tool unclamping action, or each independently perform the tool clamping action and the tool unclamping action according to a set sequence. For example, tool unclamping may be performed first on the compression sleeve, then on the stirring sleeve, and finally on the stirring pin. Alternatively, tool clamping may be performed first on the stirring pin, then on the stirring sleeve, and finally on the compression sleeve.

The stirring pin mechanism provided by the embodiments of the present disclosure includes the first tool changing component for automatically clamping and unclamping the stirring pin; the stirring sleeve mechanism includes the second tool changing component for automatically clamping and unclamping the stirring sleeve; and the compression sleeve mechanism includes the third tool changing component for automatically clamping and unclamping the compression sleeve. Through these automatic tool changing components, automatic tool clamping and unclamping can be achieved, eliminating the need for manual operation. This results in high efficiency and makes the system suitable for mass-production spot welding lines. Furthermore, the design of the automatic tool changing components is simple, rational, and easy to implement, with low production costs.

In some embodiments, the third tool changing component achieves the clamping and unclamping of the compression sleeve 740 through a pneumatic circuit or a hydraulic circuit. The pneumatic circuit and the hydraulic circuit may be of an open type or a sealed type. For example, the third tool changing component may control a position where a medium (e.g., gas or hydraulic oil) is introduced to achieve the clamping and unclamping of the compression sleeve 740. For example, when gas is introduced through a first medium inlet 462, the compression sleeve 740 may be released; when gas is introduced through a second medium inlet 463, the compression sleeve 740 may be clamped.

Merely by way of example, during the unclamping of the compression sleeve 740, under the action of the pneumatic circuit or the hydraulic circuit, the second support assembly 720 moves axially, releasing the third tool holder 730 from the second support assembly 720, thereby achieving the unclamping action of the compression sleeve 740. After a new compression sleeve 740 is in position, under the action of the pneumatic circuit or the hydraulic circuit, the second support assembly 720 moves axially back to a reset position and grips the third tool holder 730, thereby achieving the clamping action of the compression sleeve 740.

Further description regarding the first medium inlet 462 and the second medium inlet 463 may be found in the related sections below.

FIG. 4 is a schematic structural diagram of a hybrid drive mechanism according to some embodiments of the present disclosure. FIG. 5 is a schematic structural diagram of a first power component and a second power component according to some embodiments of the present disclosure.

In some embodiments, the hybrid drive mechanism 300 includes a stirring pin control mechanism 310 drivingly connected to the stirring pin mechanism 500 and a stirring sleeve control mechanism 320 drivingly connected to the stirring sleeve mechanism 600.

In some embodiments, as shown in FIG. 4, the stirring pin control mechanism 310 includes a first power component 311, a first driving component 312, a first pipeline 313, and a first actuating component 314. The first driving component 312 and the first actuating component 314 form a first sealed circuit via the first pipeline 313, and the first sealed circuit is filled with a fill medium. The fill medium may be a liquid (e.g., hydraulic oil), a gas, or the like.

The first power component 311 refers to a component that provides power for the axial movement of the stirring pin 580 along the axis of the spindle body 400. For example, the first power component 311 may be an electric motor, or the like.

In some embodiments, the first power component 311 includes a first drive motor 311-1. The first drive motor 311-1 may be a servo motor or the like. The first drive motor 311-1 may be directly connected to a driving cylinder of the first driving component 312. A first piston of the first driving component 312 moves along an axis of the driving cylinder of the first driving component 312 under a driving force of the first drive motor 311-1.

In some embodiments, the first power component 311 further includes a first speed reducer 311-2 and a first electric cylinder 311-3.

In some embodiments, as shown in FIG. 5, the first power component 311 includes the first drive motor 311-1, the first speed reducer 311-2, and the first electric cylinder 311-3 connected in series sequentially. An input end of the first speed reducer 311-2 is connected to an output end of the first drive motor 311-1, an input end of the first electric cylinder 311-3 is connected to an output end of the first speed reducer 311-2, and an output end of the first electric cylinder 311-3 is connected to the first piston of the first driving component 314, to drive the first piston of the first driving component 314 to move along the axis of the driving cylinder of the first driving component 314.

The first drive motor 311-1 is a power source for the stirring pin control mechanism 310. In some embodiments, the first drive motor 311-1 may be a servo motor or the like. When the first drive motor 311-1 operates, it transmits power to the first speed reducer 311-2.

The first speed reducer 311-2 is configured to match speeds and transmit torque between the first drive motor 311-1 and the first electric cylinder 311-3. For example, the first speed reducer 311-2 converts the power transmitted from the first drive motor 311-1 into power more suitable for driving the stirring pin 580, while simultaneously increasing the output torque to ensure stability and efficiency of a driving process. Subsequently, the first speed reducer 311-2 delivers the output power to the first electric cylinder 311-3.

The first electric cylinder 311-3 may convert rotational motion of the first drive motor 311-1 into linear motion. In some embodiments, the first electric cylinder 311-3 may be of various types, such as a linear electric cylinder or a parallel electric cylinder. In some embodiments, an output shaft (e.g., a piston rod) of the first electric cylinder 311-3 moves along an axial direction of the first electric cylinder 311-3 and then transmits the power to the first piston of the first driving component 314.

The first driving component 312 refers to a component that drives the stirring pin 580 to move axially along the axis of the spindle body 400. In some embodiments, the first driving component 312 includes the driving cylinder and the first piston. In some embodiments, the driving cylinder of the first driving component 312 may be a hydraulic driving cylinder or a pneumatic driving cylinder, etc. For example, the driving cylinder of the first driving component 312 may be the hydraulic driving cylinder, which may have various structural forms such as piston-type, plunger-type, multi-stage telescopic sleeve-type, or rack-and-pinion-type. The hydraulic cylinder of the first driving component 312 converts hydraulic energy into mechanical energy to drive the first piston of the first driving component 312 to perform linear reciprocating motion.

In some embodiments, the first driving component 312 is connected to the first power component 311. The first power component 311 drives the first piston of the first driving component 312 to move along the axis of the driving cylinder of the first driving component 312.

In some embodiments, the first driving component 312 may transmit power to the first actuating component 314, enabling the first actuating component 314 to perform corresponding actions.

In some embodiments, two first pipelines 313 may be provided. An end of one of the two first pipelines 313 is connected to the first driving component 312, and another end of the first pipeline 313 is connected to the first actuating component 314. An end of the other one of the two first pipelines 313 is connected to the first actuating component 314, and another end of the other first pipeline 313 is connected to the first driving component 312, thereby forming the first sealed circuit. The first pipeline 313 may be a hydraulic line or a pneumatic line, depending on the type of the fill medium.

The first actuating component 314 is an actuating mechanism that drives the stirring pin moving assembly for axial movement. The first actuating component 314 includes an actuating cylinder and a second piston.

In some embodiments, the actuating cylinder of the first actuating component 314 may be a hydraulic actuating cylinder or a pneumatic actuating cylinder. For example, the actuating cylinder may be the hydraulic actuating cylinder. When the actuating cylinder of the first actuating component 314 is the hydraulic actuating cylinder, the first sealed circuit is filled with a sealed volume of hydraulic oil.

In some embodiments, the first actuating component 314 is disposed between the first bearing 530 and the first module housing 540. The actuating cylinder of the first actuating component 314 is connected to the stirring pin moving assembly. In some embodiments, a limiting structure is provided inside the first module housing 540 to restrict an axial movement range of the first actuating component 314.

In some embodiments, the first driving component 312 is connected to an output end of the first power component 311, and the first actuating component 314 is connected to an output end of the first driving component 312 via the first pipeline 313.

During actual welding and tool clamping and unclamping processes, the first actuating component 314 transmits force and displacement. The plunging and refilling of the stirring pin mechanism 500 during the welding process are both driven by the first power component 311.

Driven by the first power component 311, the first piston of the first driving component 312 moves along an axial direction (i.e., the direction indicated by the double-headed arrow A in FIG. 5) of the driving cylinder of the first driving component 312. This causes a change of a volume of the fill medium inside the driving cylinder of the first driving component 312. The change of the volume is transmitted through the first sealed circuit, causing a change of a volume of the fill medium inside the actuating cylinder of the first actuating component 314. When the volume of the fill medium inside the actuating cylinder of the first actuating component 314 changes, it drives the second piston of the first actuating component 314 to move along an axial direction (i.e., the direction indicated by the double-headed arrow B in FIG. 5) of the actuating cylinder of the first actuating component 314, thereby driving the stirring pin moving assembly to move along the axial direction of the spindle body 400, and ultimately controlling the welding tool, i.e., the stirring pin 580, to move up and down along the axis of the spindle body 400.

Merely by way of example, when the driving cylinder of the first driving component 312 is a drive hydraulic cylinder and the actuating cylinder of the first actuating component 314 is a hydraulic actuating cylinder, the first power component 311 drives the first piston of the drive hydraulic cylinder of the first driving component 312 to move axially inward along the drive hydraulic cylinder. Due to the presence of the first sealed circuit, hydraulic oil inside the drive hydraulic cylinder may, under pressure, flow through the first sealed circuit into the hydraulic actuating cylinder of the first actuating component 314, causing a change of a volume of hydraulic oil within the hydraulic actuating cylinder of the first actuating component 314. Consequently, the second piston of the hydraulic actuating cylinder of the first actuating component 314 may, under pressure, move in a direction away from an interior of the hydraulic actuating cylinder.

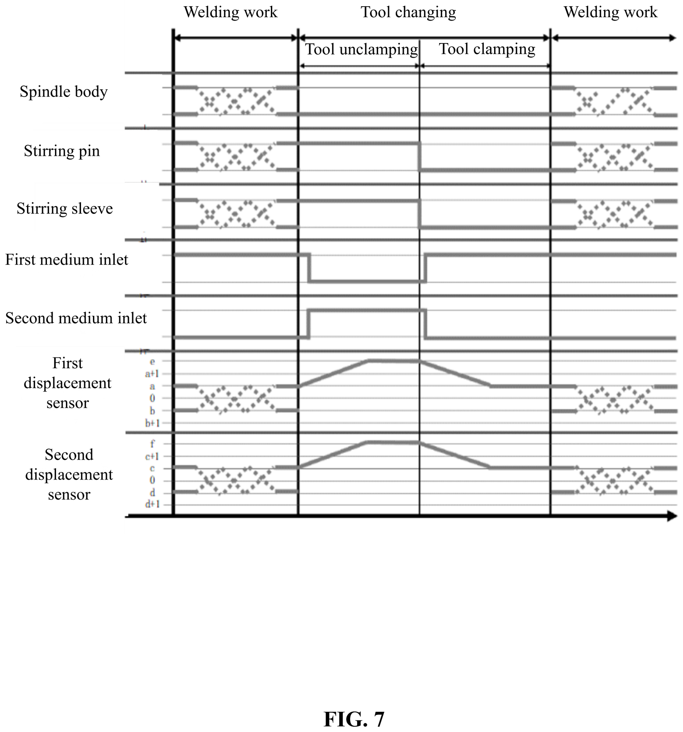

In some embodiments, a movement position of the second piston of the first actuating component 314 may be controlled programmatically to cause the stirring pin mechanism 500 to perform an axial action during welding or an axial action during tool clamping and unclamping. This includes: controlling the second piston of the first actuating component 314 to move within a first movement stroke to cause the stirring pin mechanism 500 to perform the axial action during welding; and controlling the second piston of the first actuating component 314 to move within a second movement stroke to cause the stirring pin mechanism 500 to perform the axial action during tool clamping and unclamping. The first movement stroke and the second movement stroke do not overlap. Further description regarding the first movement stroke and the second movement stroke may be found in FIG. 7 and its related description.

As the oil or gas pressure within the first sealed circuit may change with temperature variations, to ensure pressure stability of the first sealed circuit, a pressure stabilizer is provided in the stirring pin control mechanism 310 in some embodiments. For example, the pressure stabilizer may be installed in the first pipeline.

In some embodiments, the pressure stabilizer is a hydraulic stabilizer or a pneumatic stabilizer, and a type of the pressure stabilizer may be determined based on the type of the fill medium in the first sealed circuit. For example, when the fill medium in the first sealed circuit is hydraulic oil, the pressure stabilizer is the hydraulic stabilizer; when the fill medium in the first sealed circuit is a gas, the pressure stabilizer is the pneumatic stabilizer.

In some embodiments, the pressure stabilizer may employ a feedback regulation technique to automatically adjust a pressure of the first sealed circuit. For example, when the pressure of the first sealed circuit increases, the pressure stabilizer may reduce the pressure of the first sealed circuit; when the pressure of the first sealed circuit decreases, the pressure stabilizer may increase the pressure of the first sealed circuit. The embodiments of the present disclosure impose no special limitations on the manners used by the pressure stabilizer to increase or decrease the pressure, and any manners well-known to those skilled in the art may be employed.

Some embodiments of the present disclosure enable the use of a single circuit (i.e., the first sealed circuit formed by the first driving component, the first pipeline, and the first actuating component) to control the movement of the stirring pin moving assembly. Furthermore, this configuration allows the stirring pin moving assembly to perform the axial action during welding and the axial action during tool clamping and unclamping, thereby achieving substantial axial force for plunging and refilling via hydraulic means while maintaining the precision of the motor. Concurrently, the hydraulic oil within the circuit is sealed, effectively transmitting force and displacement during actual welding operations, ensuring high stability. The pressure stabilizer can automatically perform feedback regulation on the pressure of the first sealed circuit, guaranteeing pressure stability.

In some embodiments, as shown in FIG. 4, the stirring sleeve control mechanism 320 includes a second power component 321, a second driving component 322, a second pipeline 323, and a second actuating component 324. The second driving component 322 and the second actuating component 324 form a second sealed circuit via the second pipeline 323, which is filled with a fill medium. The fill medium may be a liquid (e.g., hydraulic oil), a gas, or the like.

The second power component 321 refers to a component that provides power for the axial movement of the stirring sleeve 660 along the axis of the spindle body 400. For example, the second power component 321 may be an electric motor or the like.

In some embodiments, the second power component 321 includes a second drive motor 321-1. The second drive motor 321-1 may be a servo motor or the like. The second drive motor 321-1 may be directly connected to a driving cylinder of the second driving component 322. Under a driving force of the second drive motor 321-1, a first piston of the second driving component 322 moves along an axis of the driving cylinder of the second driving component 322.

In some embodiments, the second power component 321 further includes a second speed reducer 321-2 and a second electric cylinder 321-3.

In some embodiments, as shown in FIG. 5, the second power component 321 includes a second drive motor 321-1, a second speed reducer 321-2, and a second electric cylinder 321-3 connected sequentially in series. An input end of the second speed reducer 321-2 is connected to an output end of the second drive motor 321-1, an input end of the second electric cylinder 321-3 is connected to an output end of the second speed reducer 321-2, and an output end of the second electric cylinder 321-3 is connected to the first piston of the second driving component 324, thereby driving the first piston of the second driving component 324 to move along the axis of the driving cylinder of the second driving component 324.

The structural types, connection manners, and working principles of the various components contained in the second power component 321 are similar to those of the components contained in the first power component 311, and thus are not reiterated here.

The second driving component 322 refers to a component for driving the stirring sleeve 660 to move axially along the axis of the spindle body 400. The second driving component 322 includes a driving cylinder and a first piston. In some embodiments, the driving cylinder of the second driving component 322 may be a drive hydraulic cylinder or a drive pneumatic cylinder. For example, the drive hydraulic cylinder of the second driving component 322 may be a hydraulic cylinder. The hydraulic cylinder of the second driving component 322 converts hydraulic energy into mechanical energy to drive the first piston of the second driving component 322 to perform linear reciprocating motion.

In some embodiments, the second driving component 322 is connected to the second power component 312. The second power component 312 drives the first piston of the second driving component 322 to move along the axis of the driving cylinder of the second driving component 322.

In some embodiments, two second pipelines 323 may be provided. An end of one of the two second pipelines 323 is connected to the second driving component 322, and another end of the second pipeline 323 is connected to the second actuating component 324. An end of the other one of the two second pipelines 323 is connected to the second actuating component 324, and another end of the other second pipeline 323 is connected to the second driving component 322, thereby forming the second sealed circuit. The second pipeline 323 may be a hydraulic line or a pneumatic line, depending on the type of fill medium.

The second actuating component 324 is an actuating mechanism for driving the stirring sleeve mechanism 600 to move axially along the axial direction of the spindle body. The second actuating component 324 includes an actuating cylinder and a second piston.

In some embodiments, the actuating cylinder of the second actuating component 324 may be a hydraulic actuating cylinder or a pneumatic actuating cylinder.

In some embodiments, the actuating cylinder of the second actuating component 324 may be a hydraulic cylinder. In some embodiments, when the actuating cylinder of the second actuating component 324 is the hydraulic actuating cylinder, the second sealed circuit is filled with a sealed volume of hydraulic oil.

In some embodiments, the second actuating component 324 is disposed between the second bearing 620 and the second module housing 630. The actuating cylinder of the second actuating component 324 is connected to the stirring sleeve moving assembly. In some embodiments, a limiting structure is provided inside the second module housing 630 to restrict the axial movement range of the second actuating component 324.

In some embodiments, the second driving component 322 is connected to an output end of the second power component 321, and the second actuating component 324 is connected to an output end of the second driving component 322 via the second pipeline 323.

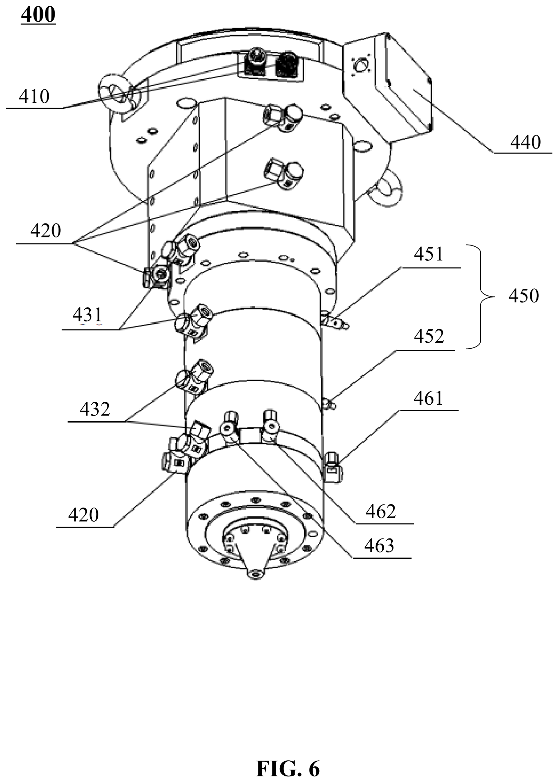

During an actual welding process and tool clamping and unclamping operations, the second actuating component 324 transmits force and displacement. The plunging and refilling of the stirring sleeve mechanism 600 during the welding process are both driven by the second power component 321. Under the drive of the second power component 321, the first piston of the second driving component 322 moves along the axis of the driving cylinder of the second driving component 322, causing a change of a volume of the fill medium inside the driving cylinder of the second driving component 322. The change of the volume is transmitted through the second sealed circuit, causing a change of a volume of the fill medium inside the actuating cylinder of the second actuating component 324. When the volume of the fill medium inside the actuating cylinder of the second actuating component 324 changes, it drives the second piston of the second actuating component 324 to move along the axis of the actuating cylinder of the second actuating component 324, thereby driving the stirring sleeve moving assembly to move along the axial direction of the spindle body 400, and ultimately controlling the welding tool, i.e., the stirring sleeve 660, to move up and down along the axis of the spindle body 400. For further details, refer to FIG. 6 and its related description.

In some embodiments, a movement position of the second piston of the second actuating component 324 may be programmatically controlled to cause the stirring sleeve mechanism 600 to perform an axial action during welding or an axial action during tool clamping and unclamping. This includes: controlling the second piston of the second actuating component 324 to move within a third movement stroke to cause the stirring sleeve mechanism 600 to perform the axial action during the welding; and controlling the second piston of the second actuating component 324 to move within a fourth movement stroke to cause the stirring sleeve mechanism 600 to perform the axial action during the tool clamping and unclamping. The third movement stroke and the fourth movement stroke do not overlap. For further details regarding the third movement stroke and the fourth movement stroke, please refer to FIG. 7 and its related description.

As the oil or gas pressure within the second sealed circuit may change with temperature variations, a pressure stabilizer is provided in the stirring sleeve control mechanism 320 in some embodiments to ensure the pressure stability of the second sealed circuit. For example, the pressure stabilizer may be installed in the second pipeline.

In some embodiments, the pressure stabilizer is a hydraulic stabilizer or a pneumatic stabilizer, and a type of the pressure stabilizer may be determined based on the type of fill medium in the second sealed circuit. For example, when the fill medium in the second sealed circuit is hydraulic oil, the pressure stabilizer is the hydraulic stabilizer; when the fill medium in the second sealed circuit is a gas, the pressure stabilizer is the pneumatic stabilizer.

In some embodiments, the pressure stabilizer may employ a feedback regulation technique to automatically adjust a pressure of the second sealed circuit. For example, when the pressure of the second sealed circuit increases, the pressure stabilizer may reduce the pressure of the second sealed circuit; when the pressure of the second sealed circuit decreases, the pressure stabilizer may increase the pressure of the second sealed circuit. The embodiments of the present disclosure impose no special limitations on the manners used by the pressure stabilizer to increase or decrease the pressure, and any manners well-known to those skilled in the art may be employed.

Some embodiments of the present disclosure enable the use of a single circuit (i.e., the second sealed circuit formed by the second driving component, the second pipeline, and the second actuating component) to control the movement of the stirring sleeve moving assembly. Furthermore, this configuration allows the stirring sleeve moving assembly to perform the axial action during the welding and the axial action during the tool clamping and unclamping, thereby achieving substantial axial force for plunging and refilling via hydraulic means while maintaining the precision of the motor. Concurrently, the hydraulic oil within the circuit is sealed, effectively transmitting force and displacement during actual welding operations, ensuring high stability. The pressure stabilizer can automatically perform feedback regulation on the pressure of the second sealed circuit, thereby guaranteeing pressure stability.

FIG. 6 is a schematic structural diagram of a spindle body according to some embodiments of the present disclosure.

In some embodiments, as shown in FIG. 6, the first medium inlet 462 and the second medium inlet 463 are mounted on an exterior of the spindle body 400.

The first medium inlet 462 and the second medium inlet 463 are interfaces for connecting the pneumatic circuit or the hydraulic circuit for the compression sleeve 740.

In some embodiments, the first medium inlet 462 and the second medium inlet 463 are used to control a tool unclamping action and a tool clamping action of the third tool changing component, respectively.

In some embodiments, gas or hydraulic oil may be introduced into the first medium inlet 462 and the second medium inlet 463 to achieve control of clamping and unclamping of the compression sleeve 740 via the pneumatic circuit or the hydraulic circuit.

In some embodiments, as shown in FIG. 6, a first interface 431 and a second interface 432 are installed on the exterior of the spindle body 400. The first interface 431 and the second interface 432 are respectively configured to control an axial action during welding or an axial action during tool clamping and unclamping performed by the stirring pin mechanism 500 and the stirring sleeve mechanism 600.

The first interface 431 is a pipeline connection point for the first pipeline 313. In some embodiments, when the first pipeline 313 is a hydraulic line, the first interface 431 may be a hydraulic connector; when the first pipeline 313 is a pneumatic line, the first interface 431 may be a pneumatic connector. In some embodiments, two first interfaces 431 may be provided, each connected to one of two ports of the actuating cylinder of the first actuating component 314 (e.g., when the actuating cylinder is a hydraulic actuating cylinder, the ports are hydraulic connectors). In some embodiments, the count of first interfaces 431 is not limited to two. In some embodiments, the first interface 431 is located on an outer wall of the first module housing 540.

The second interface 432 is a pipeline connection point for the second pipeline 323. In some embodiments, when the second pipeline 323 is a hydraulic line, the second interface 432 may be a hydraulic connector; when the second pipeline 323 is a pneumatic line, the second interface 432 may be a pneumatic connector. In some embodiments, two second interfaces 432 may be provided, each connected to one of the ports of the actuating cylinder of the second actuating component 324. In some embodiments, the count of second interfaces 432 is not limited to two. In some embodiments, the second interface 432 is located on an outer wall of the second module housing 630.

In some embodiments, as shown in FIG. 5, one or more of the following are mounted on the exterior of the spindle body 400: a spindle wiring port 410, a water circuit interface 420, a signal wire junction box 440, a displacement sensor 450, a cooling gas inlet 461, or the like.

In some embodiments, the spindle wiring port 410 supplies power to the power source of the spindle body 400 (e.g., an electric spindle). In some embodiments, the spindle wiring port 410 provides a communication interface for an encoder of the spindle body 400 (e.g., the electric spindle).

The water circuit interface 420 is an interface for connecting a water circuit. In some embodiments, a liquid (e.g., cooling water) may be introduced through the water circuit interface 420 to cool certain components. In some embodiments, the water circuit interface 420 includes a motor water circuit and a non-motor water circuit. The motor water circuit is configured to cool the motor, while the non-motor water circuit is configured to cool the stirring pin mechanism 500, the stirring sleeve mechanism 600, and the compression sleeve mechanism 700.

The signal wire junction box 440 is a housing for relaying signal wires. In some embodiments, the signal wire junction box 440 may be configured to convert an electrical signal input to the spindle body 400, such as a signal controlling a rotational speed of the spindle body 400.

The cooling gas inlet 461 is an interface for connecting a cooling gas circuit. The cooling gas circuit contains a cooling medium. In some embodiments, the cooling medium may be a gas, such as nitrogen, or the like. In some embodiments, the cooling medium may also be a liquid, such as cooling water, cooling oil, or the like. Since friction between the rotating stirring pin 580 and stirring sleeve 660 within the spindle body and stationary components generates heat, providing the cooling gas inlet 461 enables cooling of the welding tool and the workpiece.

The displacement sensor 450 is a sensor configured to monitor the displacement of various components on the spindle body.

In some embodiments, the displacement sensor 450 includes a first displacement sensor 451 and a second displacement sensor 452. The first displacement sensor 451 is installed on the first module housing 540 and configured to detect a displacement of the stirring pin mechanism 500. The second displacement sensor is installed on the second module housing 630 and configured to detect a displacement of the stirring sleeve mechanism 600. By providing the first displacement sensor 451 and the second displacement sensor 452, the motion accuracy during axial movement of the stirring pin mechanism 500 and the stirring sleeve mechanism 600, respectively, can be fed back.

FIG. 7 is a timing diagram illustrating welding operation and tool changeover according to some embodiments of the present disclosure.

In FIG. 7, the horizontal axis represents the time during which the spot welding apparatus performs welding operation and tool changeover, and the vertical axis represents component movement data or gas supply/exhaust status. As shown in FIG. 7, the vertical axis includes a rotation status of the spindle body during the welding operation and the tool changeover, a movement status of the stirring pin during the welding operation and the tool changeover, a movement status of the stirring sleeve during the welding operation and the tool changeover, a gas supply and exhaust status of the first medium inlet during the welding operation and the tool changeover, a gas supply and exhaust status of the second medium inlet during the welding operation and the tool changeover, sensor data of the first displacement sensor during the welding operation and the tool changeover, and sensor data of the second displacement sensor during the welding operation and the tool changeover.

As shown in FIG. 7, the axial movement of the welding tool during the welding process shares a single sealed circuit with the automatic tool clamping and unclamping of the welding tool. Welding and automatic tool clamping and unclamping are achieved by programmatically controlling a piston position of the actuating hydraulic or the pneumatic actuating cylinder. In some embodiments, a position where lower end surfaces of the stirring pin 580, the stirring sleeve 660, and the compression sleeve 740 lie in the same plane may be set as an origin position. During the welding process, ta maximum upward movement distance of the stirring pin 580 is a, and a maximum downward movement distance of the stirring pin 580 is b, i.e., the first movement stroke is (-b, a). A maximum upward movement distance of the stirring sleeve 660 is c, and a maximum downward movement distance of the stirring sleeve 660 is d, i.e., the third movement stroke is (-d, c).

In some embodiments, a tool clamping and releasing distance for the stirring pin 580 may be set as e, and a tool clamping and releasing distance for the stirring sleeve 660 may be set as f. Accordingly, the stirring pin 580 can achieve the tool unclamping function by moving upward from the origin position by a distance of (a+e). After installing a new tool holder (e.g., a new first tool holder) at a position (a+e) away from the origin, moving again to a position a away from the origin achieves the tool clamping function. That is, the second movement stroke is (a, a+e).

Similarly, the stirring sleeve 660 may achieve the tool unclamping function by moving upward from the origin position by a distance of (c+f). After installing a new tool holder (e.g., a new second tool holder) at a position (c+f) away from the origin, moving again to a position c away from the origin achieves the tool clamping function. That is, the fourth movement stroke is (c, c+f). (a+1), (b+1), (c+1), and (d+1) represent safety margin positions, i.e., extreme limits of the welding tool's upward and downward movement during normal welding operation, with the nominal distances being a, b, c, and d, respectively.

Compared to the method in the prior art where servo motors drive the axial movement of the stirring pin and the stirring sleeve, implementing a hybrid drive mode maintains the precision of the servo motor while utilizing hydraulic means to enhance the axial output force of the spot welding apparatus, thereby obtaining greater axial force for plunging and refilling.

It should be noted that the stirring pin mechanism 500, the stirring sleeve mechanism 600, and the compression sleeve mechanism 700 may either simultaneously perform tool clamping and unclamping actions, or each independently perform the tool clamping and unclamping actions according to a set sequence. For example, tool unclamping may be performed first on the compression sleeve 740, then on the stirring sleeve 660, and finally on the stirring pin 580; and/or tool clamping may be performed first on the stirring pin 580, then on the stirring sleeve 660, and finally on the compression sleeve 740.

In some embodiments, a temperature sensor and a thermal imaging component are further provided on the spindle body 400.

The temperature sensor may be configured to sense a temperature of a weld seam and a surrounding material during the welding process, obtaining weld seam temperature and workpiece temperature. In some embodiments, the temperature sensor may include an infrared temperature sensor.

In some embodiments, the temperature sensor may be disposed on the spindle body 400 near an end of the stirring pin 580. In some embodiments, a first temperature sensor is provided in the stirring pin mechanism 500, and/or a second temperature sensor is provided in the stirring sleeve mechanism 600. Each of the first temperature sensor and the second temperature sensor may include one or more sensors for acquiring temperature data of the stirring pin mechanism 500 and the stirring sleeve mechanism 600, respectively.

The thermal imaging component is a component configured to collect thermal distribution data of the weld seam and surrounding workpiece during the welding process. In some embodiments, the thermal imaging component may be disposed in a non-rotating part of the spindle body 400. For example, the thermal imaging component may be mounted on the third module housing 710 of the compression sleeve mechanism 700.

In some embodiments, a refrigeration component is further provided on the spindle body 400. The refrigeration component is a component configured to cool the workpiece. For example, the refrigeration component may be a fan with adjustable power, a compressor, etc. In some embodiments, the refrigeration component may be disposed at a preset location on the spindle body 400.

In some embodiments, there may be one or more preset locations. In some embodiments, the preset location may be a point on the spindle body 400 that does not participate in rotation. For example, the preset location may be set on the third module housing 710 of the compression sleeve mechanism 700.

By providing the refrigeration component, timely heat dissipation can be achieved for the workpiece surrounding the weld seam, lowering the temperature of the workpiece and preventing deformation caused by excessive workpiece temperature.

In some embodiments, the spot welding apparatus further includes a warning component and a pressure sensor.

The warning component refers to a component capable of issuing an alarm prompt, such as a buzzer, a speaker, an alarm light, or the like. In some embodiments, the warning component may issue warning prompts, which may include types such as a replenishment warning or a sealing member failure warning.

The pressure sensor refers to a sensor that measures an oil pressure in the hydraulic circuit, such as a differential pressure sensor or a liquid level sensor. In some embodiments, the pressure sensor may be disposed within a first hydraulic circuit and/or a second hydraulic circuit.

In some embodiments, one or more sealing members may be provided in the hydraulic circuit to achieve circuit sealing. A sealing member refers to a component within the hydraulic circuit that serves a sealing function. The one or more sealing members may be placed at location(s) prone to leakage or location(s) where relative movement occurs between components.

In some embodiments, the pressure sensor may be disposed within the hydraulic circuit at a location near the sealing member. For example, the pressure sensor may be disposed between the first actuating component 314 and the first module housing 540, or between the second actuating component 324 and the second module housing 630.

When the hydraulic circuit is sealed, the pressure at various points along the hydraulic circuit is stable. However, if a leakage point occurs, pressure fluctuations (e.g., a pressure drop) may exist at the leakage point. By providing the pressure sensor, pressure fluctuations within the hydraulic circuit can be promptly detected.

In some embodiments, the spot welding apparatus further includes a voiceprint sensor. The voiceprint sensor refers to a sensor that perceives sound indicative of equipment malfunction. In some embodiments, the voiceprint sensor may be disposed on the spindle body 400, for example, on an outer surface of the spindle body 400. In some embodiments, the voiceprint sensor may also be disposed near the first interface 431 and/or the second interface 432. By providing the voiceprint sensor, sound data during the operation of the spot welding apparatus can be collected.

In some embodiments, the spot welding apparatus may further include a position sensor. The position sensor refers to a sensor configured to perceive the position of a component. For example, the position sensor may be configured to determine distances between the stirring pin 580 and the first support assembly 640, the stirring sleeve 660, the compression sleeve 740, and/or the second support assembly 720. In some embodiments, the position sensor may be disposed on components inside the spindle body 400, such as on the first connecting rod 520, the first spindle 531, the second spindle 621, or the like.

In some embodiments, the spot welding apparatus further includes a control host. The control host may process data and/or information obtained from the components of the spot welding apparatus. Based on the data, information, and/or processing results, the control host may execute program instructions to perform one or more functions described in the present disclosure.

In some embodiments, the control host may include one or more processing devices (e.g., a single-core processing device or a multi-core, multi-chip processing device). Merely by way of example, the control host may include a central processing unit (CPU), an application-specific integrated circuit (ASIC), a microprocessor, or the like, or any combination thereof.

In some embodiments, the control host may be communicatively connected to the first temperature sensor, the second temperature sensor, and the thermal imaging component within the spot welding apparatus. For further description regarding the first temperature sensor, the second temperature sensor, and the thermal imaging component, please refer to the relevant descriptions above.

In some embodiments, the control host is configured to adjust a welding parameter of the spot welding apparatus based on temperature data collected by the first temperature sensor and/or the second temperature sensor, and thermal imaging data collected by the thermal imaging component.

The temperature data includes temperature data of the stirring pin mechanism 500 and temperature data of the stirring sleeve mechanism 600. For example, the temperature data temperature data of the stirring sleeve 660, temperature data of the stirring pin 580, or the like.

The thermal imaging data refers to data representing a thermal distribution within a welding location area, such as a thermographic image. The welding location area refers to a region surrounding the weld seam.

The welding parameter refer to one or more operating parameters of the spot welding apparatus during the welding process. In some embodiments, the welding parameter may include a rotational speed of the stirring pin 580 and/or a rotational speed of the stirring sleeve 660, or the like.

In some embodiments, the control host may adjust the welding parameter based on the temperature data and the thermal imaging data in various ways. For example, when the temperature data is greater than a temperature threshold, the rotational speed of the stirring pin and/or the rotational speed of the stirring sleeve may be reduced. When the thermal imaging data indicates that the temperature of the stirring pin and/or stirring sleeve is higher than that of other areas, the rotational speed of the stirring pin and/or the rotational speed of the stirring sleeve may be reduced.

In some embodiments, the control host may determine a heating characteristic based on the thermal imaging data and, in response to the heating characteristic failing to meet a preset condition, adjust the welding parameter.

The heating characteristic refers to one or more features related to a heating condition within the welding location area. For example, the heating characteristic may include at least one of an average temperature, a maximum temperature difference, a highest temperature, a lowest temperature, etc., of the welding location area. The maximum temperature difference refers to a difference between a highest temperature and a lowest temperature within the welding location area.

In some embodiments, the control host may determine the highest temperature within the welding location area based on a thermographic image captured by the thermal imaging component and calculate the average temperature and temperature difference within the welding location area to determine the heating characteristic. For example, the control host may randomly select multiple points within an image area corresponding to the welding location area in the thermographic image, calculate a mean temperature and a maximum temperature difference of the multiple points, thereby obtaining the average temperature within the welding location area.

In some embodiments, the preset condition may be used to determine whether to adjust the welding parameter. In some embodiments, the preset condition may include that the average temperature of the welding location area is greater than a temperature threshold.

In some embodiments, in response to the heating characteristic failing to meet the preset condition, the control host may adjust the welding parameter. For example, in response to the average temperature of the welding location area being greater than the temperature threshold, the control host may reduce the rotational speed of the welding tool (e.g., the stirring pin 580 and/or the stirring sleeve 660).

In some embodiments, the temperature threshold may be set by the control host or manually.

In some embodiments, the temperature threshold may be determined by the control host based on a failure probability distribution. For example, the temperature threshold may be inversely related to an average of multiple failure probabilities in the failure probability distribution. Further details regarding the failure probability distribution are provided in the related descriptions below.

In some embodiments, the control host may adjust the welding parameter in various ways based on the average temperature of the welding location area. For example, the control host may determine an adjustment amount for the rotational speed via a preset speed adjustment table based on an amount by which the average temperature is greater than the temperature threshold.

In some embodiments, the preset speed adjustment table includes a correspondence relationship between temperature excess amounts and adjustment amounts for the rotational speed. For example, the temperature excess amount may be positively correlated with the adjustment amount for the rotational speed. The rotational speed adjustment amount may include an amount for adjusting the stirring pin 580 and/or an amount for adjusting the stirring sleeve 660. In some embodiments, the control host may determine the adjustment amount for the rotational speed by querying the preset speed adjustment table based on the average temperature and the temperature threshold during the current welding process.

The preset speed adjustment table may be constructed based on various manners. For example, the preset speed adjustment table may be constructed based on historical data, experimental results, or simulations and predictions. For example, the preset speed adjustment table may be built according to historical adjustment records, where the adjustment amounts that improved the quality of welded workpieces in various scenarios are used as the rotational speed adjustment amounts for those respective scenarios.

In some embodiments, the control host may generate a certain count of candidate adjustment parameters, determine each candidate adjustment parameter via a machine learning model, and then determine a heating characteristic for a future period corresponding to each candidate adjustment parameter via an evaluation model. The candidate adjustment parameter whose corresponding heating characteristic for the future period meets the requirements is selected as the welding parameter.

In some embodiments, the evaluation model may be any one or a combination of various feasible models, such as a Deep Neural Network (DNN) model, a Convolutional Neural Network (CNN) model, etc. In some embodiments, an input to the evaluation model may include one or more candidate adjustment parameters, current temperature data, a current heating characteristic, and a material type of the workpiece to be welded. An output of the evaluation model may be the future heating characteristics for a future period corresponding to each of the candidate adjustment parameters.

The material type of the workpiece to be welded may include a composition, a ratio, a crystal structure, etc., of the materials constituting the workpiece. The current temperature data refers to the temperature data currently acquired by the first temperature sensor and the second temperature sensor. The current heating characteristic refers to the heating characteristic determined based on the currently acquired thermal imaging data.

An adjustment parameter refers to an adjustment amount applied to the welding parameter. For example, the adjustment parameter may be an amount for adjusting the rotational speed. In some embodiments, the control host may determine the one or more candidate adjustment parameters in various ways. For example, the control host may designate historical adjustment parameter(s) as the one or more candidate adjustment parameters. As another example, the control host may query the preset speed adjustment table to determine the one or more candidate adjustment parameters.

In some embodiments, the evaluation model may be trained through various manners based on multiple first training samples with first labels. For example, training may be performed based on a gradient descent technique. By way of example only, the multiple first training samples with first labels may be input into an initial evaluation model. A loss function is constructed based on the first labels and an output of the initial evaluation model, and parameters of the initial evaluation model are iteratively updated based on the loss function. The model training is considered complete when the loss function of the initial evaluation model meets a preset condition, resulting in a trained evaluation model. The preset condition may include convergence of the loss function, the count of iterations reaching a threshold, or the like.

In some embodiments, a first training sample may include a sample adjustment parameter, sample temperature data at a first sample time, a sample heating characteristic of a sample welding location area of a sample workpiece to be welded at the first sample time, and a material type of the sample workpiece. The first label may be an actual heating characteristic of the sample welding location area at a second sample time subsequent to the first sample time. The first training samples and first labels may be determined based on historical data.

In some embodiments, the control host may further determine an adjusted welding parameter via a first determination model based on the temperature data, the heating characteristic, the material type of the workpiece to be welded, and a target temperature.

In some embodiments, the first determination model may be any one or a combination of models such as a DNN, CNN, etc.

In some embodiments, an input to the first determination model may include the temperature data, the heating characteristic, the material type of the workpiece to be welded, and the target temperature, and an output of the first determination model may include the adjusted welding parameter.

The target temperature refers to a desired average temperature to be achieved within the welding location area. The target temperature may be determined by the control host based on historical data or set manually.

In some embodiments, the first determination model may be trained in various ways based on a large number of second training samples with second labels. The training process for the first determination model is similar to that for the evaluation model and will not be reiterated here.

In some embodiments, a second training sample may include sample temperature data from a sample temperature sensor at a third sample time, a sample heating characteristic of a sample welding location area of a sample workpiece to be welded at the third sample time, a material type of the sample workpiece, and a sample target temperature of the sample workpiece. The second label may be a welding parameter actually used for adjustment at a fourth sample time subsequent to the third sample time. The second training samples and second labels may be determined based on historical data. It should be noted that when determining the second label, it is necessary to ensure that the welding parameter actually used for adjustment at the fourth sample time for the second training sample enable the heating characteristic of the sample welding location area to meet the preset condition.

In some embodiments, the training process for the evaluation model and/or the first determination model may be performed by the control host. In some embodiments, the training process may be performed by an external server, which then sends the trained evaluation model and/or the first determination model to the control host.

In some embodiments of the present disclosure, adjusting the welding parameter based on the temperature data and the thermal imaging data enables precise monitoring of the welding process of the spot welding apparatus. This helps prevent excessive heat generated during welding from causing deformation of the material surrounding the weld seam, thereby improving the quality of the welded workpiece.

In some embodiments, the control host may be communicatively connected to the refrigeration component within the spot welding apparatus. For further details regarding the refrigeration component, refer to the relevant descriptions above.

In some embodiments, the control host is further configured to: in response to the heating characteristic failing to meet the preset condition, determine a refrigeration parameter, and control the refrigeration component to perform temperature regulation based on the refrigeration parameter.

In some embodiments, the preset condition may also be used to determine whether to control the refrigeration component for cooling. In some embodiments, the preset condition may include the average temperature of the welding location area being greater than the temperature threshold. For further details regarding the preset condition, refer to the relevant descriptions above.

The refrigeration parameter refers to one or more operating parameters of the refrigeration component. For example, the refrigeration parameter may include a cooling power, a fan speed, etc.

In some embodiments, in response to the current heating characteristics failing to meet the preset condition, the control host may determine the refrigeration parameter in various ways and control the refrigeration component to perform cooling based on the refrigeration parameter.

In some embodiments, in response to the current heating characteristics failing to meet the preset condition, the control host may determine an operating parameter of a refrigeration device via a preset refrigeration parameter table based on the amount by which the average temperature is greater than the temperature threshold.

In some embodiments, the preset refrigeration parameter table includes a correspondence relationship between temperature excess amounts and refrigeration parameters. In some embodiments, the control host may determine the refrigeration parameter by querying the preset refrigeration parameter table based on the average temperature and the temperature threshold during the current welding process. In some embodiments, the preset refrigeration parameter table may be predetermined based on historical data or prior knowledge.

In some embodiments, in response to the current heating characteristics failing to meet the preset condition, the control host may determine the refrigeration parameter via a machine learning model.

In some embodiments, the control host may determine the refrigeration parameter via a second determination model based on the welding parameter, the temperature data, the heating characteristic, the material type of the workpiece to be welded, and the target temperature.

In some embodiments, the second determination model may be any one or a combination of models such as a DNN, CNN, etc.

In some embodiments, an input to the second determination model may include the welding parameter, the temperature data, the heating characteristic, the material type of the workpiece to be welded, and the target temperature. An output of the second determination model may include the refrigeration parameter for the refrigeration component. For further details regarding the target temperature, refer to the relevant descriptions above.

In some embodiments, the second determination model may be trained in various ways based on a large number of third training samples with third labels. The training process for the second determination model is similar to that for the evaluation model and will not be reiterated here.

In some embodiments, a third training sample may include a sample welding parameter, sample temperature data, a sample heating characteristic of a sample welding location area of a sample workpiece to be welded, a material type of the sample workpiece, and a sample target temperature of the sample workpiece. The third training samples may be obtained based on historical data. The third label may be a historically actual operating parameter of the refrigeration component corresponding to the third training sample. The third labels can be obtained in various ways, such as through manual annotation. It should be noted that when determining the third label, it must be ensured that the historically actual operating parameter of the refrigeration component corresponding to the third training sample enabled the heating characteristic of the sample welding location area to meet the preset condition.

In some embodiments of the present disclosure, by determining the refrigeration parameter and controlling the refrigeration component to perform temperature regulation based on the refrigeration parameter, the temperature of the workpiece surrounding the weld seam can be effectively controlled, heat can be dissipated promptly, material deformation can be further reduced, and the quality of the welded material can be improved.

In some embodiments, the control host may be communicatively connected to the warning component and the pressure sensor within the spot welding apparatus. For further details regarding the warning component and the pressure sensor, refer to the relevant descriptions above.

In some embodiments, the control host is configured to: determine a rate of change of hydraulic circuit pressure based on a hydraulic circuit pressure detection sequence obtained by the pressure sensor; and in response to the rate of change being greater than a first rate-of-change threshold, generate a control instruction for a replenishment warning and send the control instruction to a warning module to control the warning module to issue the replenishment warning.

The hydraulic circuit pressure detection sequence refers to a sequence composed of multiple hydraulic circuit pressure values detected within a preset time period. The multiple hydraulic circuit pressure values in the sequence are arranged in chronological order of detection. In some embodiments, the hydraulic circuit pressure detection sequence may be automatically acquired by pressure sensors installed within the first hydraulic circuit and/or the second hydraulic circuit over the preset time period, and recorded and analyzed by the control host. The preset time period may be a historical time period.

The rate of change of hydraulic circuit pressure refers to a ratio of pressure drop within the hydraulic circuit to a corresponding time interval over the preset period. In some embodiments, the rate of change may be determined based on a difference between the hydraulic circuit pressure values corresponding to a start time and an end time within the hydraulic circuit pressure detection sequence, and a time interval between the start time and the end time.

The rate of change of hydraulic circuit pressure reflects the severity of issues within the hydraulic circuit. A relatively high rate of decrease may indicate a significant leak or other malfunction.

The first rate-of-change threshold refers to a maximum allowable rate of pressure drop in the hydraulic circuit under normal operating conditions. In some embodiments, the first rate-of-change threshold may be determined based on historical operational data, manufacturer recommendations, or empirical formulas.

The replenishment warning refers to an alert signal prompting the replenishment of oil. When the rate of pressure drop in the hydraulic circuit is greater than the first rate-of-change threshold, the control host instructs the warning module to issue the replenishment warning to notify maintenance personnel to replenish oil promptly, thereby preventing system failure due to insufficient oil.

In some embodiments, the control host is further configured to: in response to the rate of change of hydraulic circuit pressure being greater than a second rate-of-change threshold, determine a component failure probability; and in response to the component failure probability being greater than a probability threshold, generate a control instruction for a failure warning and send the control instruction to the warning module to control the warning module to issue the failure warning.

The second rate-of-change threshold refers to a minimum rate of pressure drop in the hydraulic circuit when a component (e.g., the hydraulic circuit) fails.

Under normal hydraulic oil loss, the pressure loss in a sealed hydraulic circuit over a preset time period should be constant. If the pressure loss is greater than a certain range, it indicates a leak in the hydraulic circuit. Therefore, when the rate of change of hydraulic circuit pressure is greater than the second rate-of-change threshold, it may be considered that the hydraulic circuit may have a leak risk. In some embodiments, the second rate-of-change threshold may be determined based on historical operational data, manufacturer recommendations, or empirical formulas. In some embodiments, the second rate-of-change threshold is greater than the first rate-of-change threshold.

The component failure probability refers to a likelihood that a component (e.g., a seal within the hydraulic circuit) is faulty (e.g., at risk of leakage). In some embodiments, the control host may determine the component failure probability based on the rate of change of hydraulic circuit pressure. For example, the rate of change of hydraulic circuit pressure is directly proportional to the component failure probability, i.e., the greater the pressure drop is, the higher the component failure probability is.

The probability threshold is a threshold value for the component failure probability, used to determine whether to issue the failure warning. The probability threshold may be determined based on historical operational data, manufacturer recommendations, or empirical formulas.

The failure warning refers to an alert signal indicating a potential malfunction. When the component failure probability is greater than the probability threshold, the control host instructs the warning module to issue the failure warning to alert maintenance personnel to immediately inspect the system, identify, and repair potential fault points.

In some embodiments, when the rate of pressure drop in the hydraulic circuit is greater than the second rate-of-change threshold, the control host instructs the warning module to issue the failure warning.

In some embodiments, the control host is further configured to: in response to the rate of change of hydraulic circuit pressure being greater than the second rate-of-change threshold, determine a current hydraulic circuit pressure based on the pressure sensor; and determine a sealing member failure probability of the sealing member based on the current hydraulic circuit pressure, a cumulative usage time of the sealing member, a rated service life of the sealing member, and the first rate-of-change threshold. The current hydraulic circuit pressure refers to the hydraulic circuit pressure value obtained after determining that the rate of change within the preset time period is greater than the second rate-of-change threshold. The cumulative usage time and the rated service life of the sealing member may be determined by the control host querying sealing member usage records or input manually. The sealing member usage records are pre-stored in a storage unit of the spot welding apparatus. The storage unit of the spot welding apparatus may be located within the control host.

In some embodiments, the control host may determine the sealing member failure probability as: the cumulative usage time of the sealing member divided by the rated service life of the sealing member, plus the current hydraulic circuit pressure at the corresponding location divided by the first rate-of-change threshold.

By incorporating the warning module and the pressure sensor, the spot welding apparatus can automatically monitor changes in hydraulic circuit pressure and promptly issue the replenishment warning or the failure warning, thereby facilitating the timely detection and resolution of hydraulic circuit issues, preventing equipment failures caused by such problems, and enhancing the reliability and safety of the spot welding apparatus. Furthermore, by reducing equipment downtime due to malfunctions, production efficiency can be improved and maintenance costs lowered, thereby delivering significant economic benefits for the enterprise.

In some embodiments, the control host may be communicatively connected to a voiceprint sensor on the spot welding apparatus. For further details regarding the voiceprint sensor, refer to the relevant descriptions above.

In some embodiments, the control host is configured to determine the failure probability distribution of the spot welding apparatus based on sound data collected by the voiceprint sensor.

The sound data refers to acoustic wave data captured by the voiceprint sensor during equipment operation. For example, a normally operating apparatus may produce steady and continuous acoustic wave data, whereas a malfunctioning apparatus may generate intermittent or abnormally high-frequency acoustic wave data.

The failure probability distribution refers to a distribution of probabilities of failures existing in various components of the spot welding apparatus. Failure types may include multiple categories. For example, the failure types may include hydraulic circuit failures (e.g., circuit blockage, seal leakage), transmission failures (e.g., failures of components such as gears, bearings, connecting rods, spindles), as well as electrical system failures, tool clamping failures, tool unclamping failures, etc.

In some embodiments, the failure probability distribution includes multiple failure types present in the spot welding apparatus and their corresponding failure probabilities.

In some embodiments, the control host may determine the failure probability distribution of the spot welding apparatus based on the sound data collected by the voiceprint sensor in various ways.

In some embodiments, the control host may embed the sound data using an embedding model to obtain an embedding vector; match the embedding vector within a vector database based on the embedding vector to identify one or more target vectors with a matching similarity higher than a similarity threshold; and construct the failure probability distribution based on historical failure types corresponding to the one or more target vectors. For example, the count of target vectors for each historical failure type may be determined, a proportion of the count of target vectors for each historical failure type relative to a total count of target vectors may be determined, and the failure probability distribution may be constructed based on the proportions of the count of target vectors for all historical failure types.

In some embodiments, the sound data may be input into the embedding model. By analyzing a spectral feature, a time-domain feature, and an energy distribution feature of the sound data and converting the spectral feature, the time-domain feature, and the energy distribution feature into points in a high-dimensional space, the embedding vector is obtained.

In some embodiments, the vector database contains multiple reference embedding vectors, with each reference vector corresponding to a failure type. The reference embedding vectors are constructed based on sound data from various historically actual failures, with each reference vector corresponding to a specific failure type.

In some embodiments, the vector database and the embedding model may be constructed by a remote server and pre-stored in the storage unit of the spot welding apparatus.

In some embodiments, the control host is further configured to determine the failure probability distribution based on the sound data and a welding tool state corresponding to an acoustic signal in each time interval within the sound data.

A time interval is a segment divided within a time period corresponding to the sound data. The time interval may be obtained through various division manners. For example, the time period corresponding to the sound data may be uniformly divided into time intervals of a specific duration based on the duration.

In some embodiments, the welding tool state may include the welding tool being in a working state, a changing state, a shutdown state, etc. When the welding tool is in the working state, the welding tool state may further include stirring pin plunging, stirring pin retracting, stirring sleeve plunging, stirring sleeve retracting, etc. When the welding tool is in the changing state, the welding tool state may further include distances of the stirring pin, the stirring sleeve, and the compression sleeve relative to the origin position. For further details regarding the origin position, refer to FIG. 7 and its related description.

There is a correspondence between the acoustic signal in each time interval and the welding tool state. In some embodiments, the correspondence between the welding tool state and the acoustic signal may be predetermined based on historical data. For example, acoustic signals under different welding tool states may be pre-collected and mapped accordingly.

In some embodiments, the control host may determine a failure probability for each time interval based on the acoustic signal in each time interval within the sound data; determine a failure type corresponding to the acoustic signal based on the welding tool state corresponding to the acoustic signal; and, based on the time interval to which the acoustic signal belongs, map the failure type and failure probability one-to-one to obtain the failure probability distribution.

For example, when an abnormal acoustic signal is present, it may indicate a potential component failure. The higher the proportion of abnormal acoustic signals within a time interval is, the higher the failure probability is. As another example, if the welding tool state corresponding to a potentially faulty acoustic signal is the changing state, the failure type may be determined as a tool clamping failure or a tool unclamping failure. If the welding tool state corresponding to a potentially faulty acoustic signal is the working state, the failure type may be determined as a transmission failure.

In some embodiments, the failure probability distribution may be determined through vector database matching, with a determination manner similar to the aforementioned approach, which will not be reiterated here. For example, the control host may construct an embedding vector based on the acoustic signal of a time interval and its corresponding welding tool state, and determine the failure probability distribution through vector database matching.

In some embodiments of the present disclosure, the failure probability distribution is determined based on the sound data and the welding state corresponding to the acoustic signal in each time interval. This enables more precise fault diagnosis, allows for prediction and warning issuance before a fault occurs, thereby reducing equipment downtime and improving production efficiency.

In some embodiments, when the voiceprint sensor is disposed near the first hydraulic circuit interface and/or the second hydraulic circuit interface, the control host is further configured to determine a hydraulic circuit failure probability based on hydraulic circuit sound data collected by the voiceprint sensor and a hydraulic circuit feature.

In some embodiments, the hydraulic circuit feature include at least one of the rate of change of hydraulic circuit pressure and an installation location of the pressure sensor. For example, the installation location of the pressure sensor may be in the first hydraulic circuit and/or the second hydraulic circuit.

In some embodiments, the control host may construct an embedding vector based on the hydraulic circuit sound data collected by the voiceprint sensor and the hydraulic circuit feature; and determine the hydraulic circuit failure probability by matching the embedding vector within a vector database.

The hydraulic circuit sound data collected by the voiceprint sensor differs when the hydraulic circuit is faulty versus when it is operating normally. Therefore, the hydraulic circuit sound data can reflect whether the hydraulic circuit is in a normal operating state. The manner for determining the hydraulic circuit failure probability through vector database matching is similar to the aforementioned approach and will not be reiterated here.

In some embodiments of the present disclosure, by incorporating the voiceprint sensor, the control host can achieve comprehensive fault monitoring and prediction for the spot welding apparatus based on sound data analysis, significantly improving maintenance efficiency and equipment reliability. Furthermore, by analyzing the hydraulic circuit sound data from the first and second hydraulic circuits in conjunction with their corresponding hydraulic circuit pressures, faults in the hydraulic circuit can be more accurately identified. For example, this embodiment can detect anomalies even when the sealed hydraulic circuit pressure is within the threshold range, but the sound data is greater than abnormal values.

In some embodiments, the control host may be communicatively connected to the position sensor on the spot welding apparatus. For further details regarding the position sensor, refer to the relevant descriptions above.

In some embodiments, the control host is configured to determine a welding tool position based on sensing data collected by the position sensor; determine a welding tool installation state based on the welding tool position; and, in response to the welding tool installation state being a loose state, control the spindle body to stop rotating and issue a warning message.

In some embodiments, the sensing data collected by the position sensor may include respective position coordinates of components such as the stirring pin, the pull claw, the stirring sleeve, the first support assembly, the compression sleeve, and the second support assembly.

The welding tool position refers to relative positions among the tools. For example, the welding tool position may include at least one of a relative distance between the stirring pin and the pull claw, a relative distance between the stirring sleeve and the first support assembly, and a relative distance between the compression sleeve and the second support assembly.

In some embodiments, when the position sensor confirms the respective position coordinates of the components, the control host may perform multiple verifications on the sensing data collected by the position sensor to ensure data accuracy.

In some embodiments, the count of verifications may be related to the component failure probability corresponding to the component. For example, the count of verifications may be positively correlated with the component failure probability. In some embodiments, the count of verifications may be related to at least one of a sealing member failure probability, a hydraulic circuit failure probability, and a transmission failure probability corresponding to the component.

In some embodiments, the control host may determine a fault reference value based on the sealing member failure probability, the hydraulic circuit failure probability, and the transmission failure probability corresponding to the component; and determine the count of verifications by querying a preset verification count table based on the fault reference value.

In some embodiments, the fault reference value may be positively correlated with the sealing member failure probability, the hydraulic circuit failure probability, and the transmission failure probability corresponding to the component. In some embodiments, the control host may determine the fault reference value using a preset algorithm based on the sealing member failure probability, the hydraulic circuit failure probability, and the transmission failure probability corresponding to the component. An exemplary equation for the preset algorithm is shown below:

$$A = xm_1 + ym_2 + zm_3$$

In the above equation, A denotes the fault reference value for the component, $m_1$ denotes the sealing member failure probability corresponding to the component, $m_2$ denotes the hydraulic circuit failure probability corresponding to the component, $m_3$ denotes the transmission failure probability corresponding to the component, a, b, and c are weighting factors, related to the degree of damage caused by the different fault types (i.e., a sealing member failure, a hydraulic circuit failure, and a transmission failure) to the spot welding apparatus.

Since the transmission failure may require replacement of major components, whereas sealing members are consumable parts and the hydraulic circuit failure may often be addressed by replacing fluid or other means, the degree of damage caused by the transmission failure to the spot welding apparatus is relatively higher than that caused by the hydraulic circuit failure or the transmission failure. Therefore, a higher weight is assigned to the transmission failure probability, while lower weights are assigned to the hydraulic circuit probability and the sealing member failure probability.

In some embodiments, the preset verification count table includes a correspondence between fault reference values and counts of verifications. The preset verification count table may be predetermined based on historical data or prior knowledge. In some embodiments, the control host may query the preset verification count table based on a current fault reference value and determine the count of verifications corresponding to the current fault reference value as the current count of verifications.

In some embodiments of the present disclosure, for components with a high failure probability, repeated multiple verifications allow for more accurate fault assessment; for components with a low failure probability, calculating and setting an appropriate count of verifications can reduce the computational load on the control host.

The welding tool installation state refers to an installation condition of the welding tool on the spot welding apparatus. For example, the welding tool installation state may include a fixed installation state, a tool unclamping state, a tool clamping state, and the loose state. The fixed installation state indicates that the welding tool is correctly installed and secured in a proper position. The welding tool unclamping state and the tool clamping state refer to the welding tool being in the process of preparing for removal and installation of a new tool holder, respectively. The loose state indicates that the welding tool is not correctly installed or has become loose, requiring immediate inspection and repair.

In some embodiments, the control host may compare the welding tool position with predefined welding tool positions corresponding to various welding tool installation states one by one and identify the welding tool installation state associated with the matching predefined welding tool position as the installation state corresponding to the current welding tool position.

For example, taking the embodiment associated with FIG. 7, the stirring pin 580 is in a state before tool unclamping begins if its upward travel distance is within the maximum distance a. However, if the distance between the stirring pin 580 and the first support assembly 640 is greater than a threshold, it indicates the welding tool has become loose, and the stirring pin 580 is considered to be in the loose state.

As another example, again referring to the embodiment associated with FIG. 7, the stirring sleeve 660 may achieve tool unclamping by moving upward from the origin position by a distance of (c+f). After a new tool holder is installed at this position, moving to a position c away from the origin position achieves tool clamping, putting the stirring sleeve 660 in the tool clamping state. However, if after installing the new tool holder and moving downward to a position d away from the origin position, the distance between the stirring sleeve 660 and the second support assembly 720 still is greater than the normal value for a secured state, it indicates incomplete clamping, meaning the stirring sleeve 660 is in the loose state.

In some embodiments, in response to the welding tool installation state being the loose state, the control host may control the spindle body to stop rotating and instruct the warning component to issue a warning message. In some embodiments, the warning message may include information reminding an operator to check the welding tool installation state, prompting whether to perform a tool change operation, or advising to halt device operation (e.g., stopping for inspection if tool loosening occurs during welding).

Since the spindle body must not rotate during tool clamping and unclamping, and similarly, it may be hazardous for the spindle to rotate if the welding tool is not properly secured, automatically detecting and confirming the welding tool installation state enables timely identification of a loose tool condition and implementation of warning measures, thereby preventing production accidents caused by tool failure, enhancing production efficiency, and reducing equipment maintenance costs. Furthermore, this mechanism can also assist in tool clamping and unclamping operations, ensuring the accuracy and efficiency of tool replacement tasks.

Some embodiments of the present disclosure further provide a control mechanism. The control mechanism includes a driving component, a pipeline, and an actuating component. The driving component forms a sealed circuit with the actuating component via the pipeline. The sealed circuit is filled with a filling medium. The driving component includes a driving cylinder and a first piston. The actuating component includes an actuating cylinder and a second piston.

The driving component refers to a component that transmits a driving force during a process of driving an external component to move.

In some embodiments, the driving cylinder may be a hydraulic driving cylinder or a pneumatic driving cylinder. For example, the driving cylinder of the driving component may be the hydraulic driving cylinder. For example, the hydraulic driving cylinder may adopt various structural forms, such as a piston type, a plunger type, a multi-stage telescopic sleeve type, or a rack and pinion type. The hydraulic driving cylinder of the driving component may convert hydraulic energy into mechanical energy to drive the first piston of the driving component to perform linear reciprocating motion.

In some embodiments, two pipelines may be provided. An end of one of the two pipelines is connected to the driving component, and another end of the pipeline is connected to the actuating component; an end of another one of the two pipelines is connected to the actuating component, and another end of the other pipeline is connected to the driving component, thereby forming the sealed circuit. The pipeline may be a hydraulic line or a pneumatic line, depending on a type of the filling medium.

The actuating component refers to an actuating mechanism that drives the external component to move during the process of moving the external component.

In some embodiments, the actuating cylinder may be a hydraulic actuating cylinder or a pneumatic actuating cylinder. For example, the actuating cylinder may be the hydraulic actuating cylinder. When the actuating cylinder of the actuating component is the hydraulic actuating cylinder, hydraulic oil in a sealed state may be filled in the sealed circuit.

In some embodiments, movement of the first piston along an axis of the driving cylinder causes a change of a volume of the filling medium within the driving cylinder, and further causes a change of a volume of the filling medium within the actuating cylinder via the sealed circuit. The change of the volume of the filling medium within the actuating cylinder drives the second piston to move along an axis of the actuating cylinder. More descriptions may be found in the relevant descriptions regarding the stirring pin control mechanism and the stirring sleeve control mechanism.

In some embodiments, the control mechanism includes a power component. The driving component is connected to the power component. The power component drives the first piston to move along the axis of the driving cylinder. The power component refers to a component that provides power for movement of the external component. For example, the power component may be an electric motor.

In some embodiments, the power component includes a drive motor connected to the driving cylinder. The first piston moves along the axis of the driving cylinder under a driving force of the drive motor.

In some embodiments, the power component further includes a speed reducer and an electric cylinder. The drive motor, the speed reducer, and the electric cylinder are connected in series sequentially. An output end of the drive motor is connected to an input end of the speed reducer, an output end of the speed reducer is connected to an input end of the electric cylinder, and an output end of the electric cylinder is connected to the first piston, to drive the first piston to move along the axis of the driving cylinder. More descriptions regarding the power component may be found in the relevant descriptions regarding the first power component and the second power component.

In some embodiments, the actuating cylinder may be connected to at least one moving component to control the at least one moving component to move. When the second piston of the actuating cylinder moves along the axis of the actuating cylinder, the actuating component may drive the at least one moving component to move.

In some embodiments, each moving component of the at least one moving component includes at least two movement strokes. Different movement strokes correspond to different actuating actions. In some embodiments, the at least two movement strokes for the same moving component do not overlap.

In some embodiments, the at least one moving component includes a stirring pin moving assembly. The actuating cylinder may be connected to the stirring pin moving assembly. When the second piston moves along the axis of the actuating cylinder, the actuating component drives the stirring pin moving assembly to move. The stirring pin moving assembly includes at least two movement strokes, where different movement strokes correspond to different actuating actions.

In some embodiments, the stirring pin moving assembly includes a first movement stroke and a second movement stroke. The first movement stroke and the second movement stroke do not overlap. The actuating action corresponding to the first movement stroke is an axial action during welding. The actuating action corresponding to the second movement stroke is an axial action during tool clamping and unclamping. During welding, the stirring pin moving assembly is controlled to move within the first movement stroke along an axial direction of the stirring pin moving assembly; during tool clamping and unclamping of the stirring pin, the stirring pin moving assembly is controlled to move within the second movement stroke along the axial direction of the stirring pin moving assembly. The foregoing control may be performed by a program.

In some embodiments, the at least one moving component includes a stirring sleeve moving assembly. The actuating cylinder may be connected to the stirring sleeve moving assembly. When the second piston moves along the axis of the actuating cylinder, the actuating component drives the stirring sleeve moving assembly to move. The stirring sleeve moving assembly includes at least two movement strokes, where different movement strokes correspond to different actuating actions.

In some embodiments, the stirring sleeve moving assembly includes a third movement stroke and a fourth movement stroke. The third movement stroke and the fourth movement stroke do not overlap. The actuating action corresponding to the third movement stroke is an axial action during welding. The actuating action corresponding to the fourth movement stroke is an axial action during tool clamping and unclamping. During the welding, the stirring sleeve moving assembly is controlled to move within the third movement stroke along the axial direction of the stirring sleeve moving assembly. During the tool clamping and unclamping of the stirring sleeve, the stirring sleeve moving assembly is controlled to move within the fourth movement stroke along the axial direction of the stirring sleeve moving assembly. The foregoing control may be performed by a program.

More descriptions regarding the moving component may be found in descriptions regarding the stirring pin moving assembly and the stirring sleeve moving assembly described above.

The control mechanism provided by some embodiments of the present disclosure can control movement of the at least one moving component using one circuit (i.e., the sealed circuit formed by the driving component, the pipeline, and the actuating component). The control mechanism enables the moving component to perform at least two actuating actions, and different movement strokes correspond to different actuating actions. Applying the control mechanism to the field of spot welding enables control of the welding tool to perform the axial action during welding and the axial action during tool clamping and unclamping using one circuit. While maintaining the precision of the motor, the control mechanism obtains large axial forces for plunging and refilling in a hydraulic manner. Meanwhile, the filling medium (e.g., gas or hydraulic oil) in the circuit is in a sealed state. In an actual welding process, the motor provides the driving force, and the sealed filling medium functions for transmission, thereby achieving high stability performance.

Some embodiments of the present disclosure further provide a spindle system. The spindle system includes a spindle body, at least one moving component connected to the spindle body, and at least one control mechanism connected to the spindle body. The control mechanism includes a driving component, a pipeline, and an actuating component. The driving component forms a sealed circuit with the actuating component via the pipeline. The sealed circuit is filled with a filling medium. The driving component includes a driving cylinder and a first piston. The actuating component includes an actuating cylinder and a second piston. The actuating cylinder is connected to the at least one moving component. Movement of the first piston along an axis of the driving cylinder causes a change of a volume of the filling medium within the driving cylinder, and further causes a change of a volume of the filling medium within the actuating cylinder via the sealed circuit. The change of the volume of the filling medium within the actuating cylinder drives the second piston to move along an axis of the actuating cylinder.

In some embodiments, the control mechanism includes a power component. The driving component is connected to the power component. The power component drives the first piston to move along the axis of the driving cylinder.

In some embodiments, the power component includes a drive motor connected to the driving cylinder, and the first piston moves along the axis of the driving cylinder under a driving force of the drive motor.

In some embodiments, the power component further includes a speed reducer and an electric cylinder. The drive motor, the speed reducer, and the electric cylinder are connected in series sequentially. An output end of the drive motor is connected to an input end of the speed reducer, an output end of the speed reducer is connected to an input end of the electric cylinder, and an output end of the electric cylinder is connected to the first piston, to drive the first piston to move along the axis of the driving cylinder.

In some embodiments, the at least one control mechanism includes a stirring pin control mechanism. The stirring pin control mechanism includes a first power component, a first driving component, a first pipeline, and a first actuating component. The first driving component forms a first sealed circuit with the first actuating component via the first pipeline. The at least one moving component includes a stirring pin moving assembly. An actuating cylinder of the first actuating component is connected to the stirring pin moving assembly. The first driving component is connected to the first power component. The first power component drives the first piston of the first driving component to move along the axis of the driving cylinder of the first driving component. Movement of the first piston of the first driving component along the axis of the driving cylinder of the first driving component causes a change of a volume of the filling medium within the driving cylinder of the first driving component, and further causes a change of a volume of the filling medium within the actuating cylinder of the first actuating component via the first sealed circuit. The change of the volume of the filling medium within the actuating cylinder of the first actuating component drives the second piston of the first actuating component to move along the axis of the actuating cylinder of the first actuating component, and further drives the stirring pin moving assembly to move. The stirring pin moving assembly includes at least two movement strokes, where different movement strokes correspond to different actuating actions.

In some embodiments, the stirring pin moving assembly includes a first movement stroke and a second movement stroke. The first movement stroke and the second movement stroke do not overlap. The actuating action corresponding to the first movement stroke is an axial action during welding. The actuating action corresponding to the second movement stroke is an axial action during tool clamping and unclamping. During the welding, the stirring pin moving assembly is controlled to move within the first movement stroke along an axial direction of the stirring pin moving assembly. During the tool clamping and unclamping of the stirring pin, the stirring pin moving assembly is controlled to move within the second movement stroke along the axial direction of the stirring pin moving assembly. The foregoing control may be performed by a program.

In some embodiments, the at least one control mechanism includes a stirring sleeve control mechanism. The stirring sleeve control mechanism includes a second power component, a second driving component, a second pipeline, and a second actuating component. The second driving component forms a second sealed circuit with the second actuating component via the second pipeline. The at least one moving component includes a stirring sleeve moving assembly. An actuating cylinder of the second actuating component is connected to the stirring sleeve moving assembly. The second driving component is connected to the second power component, and the second power component drives a first piston of the second driving component to move along an axis of a driving cylinder of the second driving component. Movement of the first piston of the second driving component along the axis of the driving cylinder of the second driving component causes a change of a volume of a filling medium within the driving cylinder of the second driving component, and further causes a change of a volume of the filling medium within the actuating cylinder of the second actuating component via the second sealed circuit. The change of the volume of the filling medium within the actuating cylinder of the second actuating component drives a second piston of the second actuating component to move along an axis of the actuating cylinder of the second actuating component, and further drives the stirring sleeve moving assembly to move. The stirring sleeve moving assembly includes at least two movement strokes, where different movement strokes correspond to different actuating actions.

In some embodiments, the stirring sleeve moving assembly includes a third movement stroke and a fourth movement stroke. The third movement stroke and the fourth movement stroke do not overlap. The actuating action corresponding to the third movement stroke is an axial action during welding. The actuating action corresponding to the fourth movement stroke is an axial action during tool clamping and unclamping. During the welding, the stirring sleeve moving assembly is controlled to move within the third movement stroke along an axial direction of the stirring sleeve moving assembly. During the tool clamping and unclamping of the stirring sleeve, the stirring sleeve moving assembly is controlled to move within the fourth movement stroke along the axial direction of the stirring sleeve moving assembly. The foregoing control may be performed by a program.

More descriptions regarding the spindle body, the moving component, and the control mechanism may be found elsewhere in the present disclosure.

The spindle system provided by some embodiments of the present disclosure can use one circuit (i.e., the first sealed circuit formed by the first driving component, the first pipeline, and the first actuating component) to control the movement of the stirring pin moving assembly, and use another circuit (i.e., the second sealed circuit formed by the second driving component, the second pipeline, and the second actuating component) to control the movement of the stirring sleeve moving assembly. In this way, each of the stirring pin moving assembly and the stirring sleeve moving assembly are enabled to perform at least two actuating actions, i.e., one circuit may be used to control the axial action of the welding tool during welding and the axial action during tool clamping and unclamping. While maintaining the precision of the motor, the hydraulic approach is used to obtain large axial forces for plunging and refilling. Meanwhile, the filling medium (e.g., gas or hydraulic oil) in the circuit is in a sealed state. In an actual welding process, the motor provides the driving force, and the sealed filling medium functions for transmission, thereby ensuring high stability.

The basic concepts have been described above. Obviously, to those skilled in the art, the foregoing detailed disclosure is merely an example and does not constitute a limitation to the present disclosure. Although not explicitly stated herein, those skilled in the art may make various modifications, improvements, and amendments to the present disclosure. Such modifications, improvements, and amendments are suggested in the present disclosure. Therefore, such modifications, improvements, and amendments still fall within the spirit and scope of the exemplary embodiments of the present disclosure.

Meanwhile, the present disclosure uses specific words to describe the embodiments of the present disclosure. For example, "an embodiment", "one embodiment", and/or "some embodiments" mean a certain feature, structure, or characteristic related to at least one embodiment of the present disclosure. Therefore, it should be emphasized and noted that "an embodiment" or "one embodiment" or "an alternative embodiment" mentioned twice or more in different places in the present disclosure does not necessarily mean the same embodiment. In addition, certain features, structures, or characteristics in one or more embodiments of the present disclosure may be appropriately combined.

Similarly, it should be noted that, to simplify the expression disclosed in the present disclosure to help understand one or more inventive embodiments, sometimes various features are incorporated into one embodiment, drawing, or description thereof in the foregoing description of the embodiments of the present disclosure. However, this disclosure manner does not mean that the object of the present disclosure requires more features than the features mentioned in the claims. Rather, claimed subject matter may lie in less than all features of a single foregoing disclosed embodiment.

For each patent, patent application, patent application publication, and other materials, such as articles, books, specifications, publications, documents, etc., cited in the present disclosure, the entire contents thereof are hereby incorporated into the present disclosure as references. Application history documents that are inconsistent with or conflict with the content of the present disclosure are excluded, and documents that limit the broadest scope of the claims of the present disclosure (currently or later appended to the present disclosure) are also excluded. It should be noted that, if the description, definition, and/or use of terms in the ancillary materials of the present disclosure are inconsistent with or conflict with the content of the present disclosure, the description, definition, and/or use of terms in the present disclosure shall prevail.

Finally, it should be understood that the embodiments in the present disclosure are only used to illustrate the principles of the embodiments of the present disclosure. Other variations may also fall within the scope of the present disclosure. Therefore, as an example rather than a limitation, alternative configurations of the embodiments of the present disclosure may be considered consistent with the teachings of the present disclosure. Accordingly, the embodiments of the present disclosure are not limited to the embodiments explicitly introduced and described in the present disclosure.

## Claims

1. A control mechanism, comprising a driving component, a pipeline, and an actuating component, wherein the driving component forms a sealed circuit with the actuating component via the pipeline, and the sealed circuit is filled with a filling medium; the driving component includes a driving cylinder and a first piston, the actuating component includes an actuating cylinder and a second piston;

   movement of the first piston along an axis of the driving cylinder causes a change of a volume of the filling medium within the driving cylinder, and further causes a change of a volume of the filling medium within the actuating cylinder via the sealed circuit; and
   the change of the volume of the filling medium within the actuating cylinder drives the second piston to move along an axis of the actuating cylinder.

2. The control mechanism according to claim 1, further comprising a power component, wherein the driving component is connected to the power component, and the power component drives the first piston to move along the axis of the driving cylinder.

3. The control mechanism according to claim 2, wherein the power component includes a drive motor connected to the driving cylinder, and the first piston moves along the axis of the driving cylinder under a driving force of the drive motor.

4. The control mechanism according to claim 3, wherein the power component further includes a speed reducer and an electric cylinder, an output end of the drive motor is connected to an input end of the speed reducer, an output end of the speed reducer is connected to an input end of the electric cylinder, and an output end of the electric cylinder is connected to the first piston, to drive the first piston to move along the axis of the driving cylinder.

5. The control mechanism according to claim 1, wherein the actuating cylinder is connected to at least one moving component, and when the second piston moves along the axis of the actuating cylinder, the actuating component drives the at least one moving component to move, each of the at least one moving component includes at least two movement strokes, and different movement strokes correspond to different actuating actions.

6. The control mechanism according to claim 5, wherein the at least one moving component includes a stirring pin moving assembly, wherein the actuating cylinder is connected to the stirring pin moving assembly, and when the second piston moves along the axis of the actuating cylinder, the actuating component drives the stirring pin moving assembly to move, the stirring pin moving assembly including at least two movement strokes, wherein different movement strokes correspond to different actuating actions.

7. The control mechanism according to claim 6, wherein the stirring pin moving assembly includes a first movement stroke and a second movement stroke, the first movement stroke and the second movement stroke do not overlap;

   during welding, the stirring pin moving assembly is controlled to move within the first movement stroke along an axial direction of the stirring pin moving assembly;
   during tool clamping and unclamping of a stirring pin, the stirring pin moving assembly is controlled to move within the second movement stroke along the axial direction of the stirring pin moving assembly.

8. The control mechanism according to claim 5, wherein the at least one moving component includes a stirring sleeve moving assembly, wherein the actuating cylinder is connected to the stirring sleeve moving assembly, and when the second piston moves along the axis of the actuating cylinder, the actuating component drives the stirring sleeve moving assembly to move, the stirring sleeve moving assembly including at least two movement strokes, wherein different movement strokes correspond to different actuating actions.

9. The control mechanism according to claim 8, wherein the stirring sleeve moving assembly includes a third movement stroke and a fourth movement stroke, the third movement stroke and the fourth movement stroke do not overlap;

   during welding, the stirring sleeve moving assembly is controlled to move within the third movement stroke along an axial direction of the stirring sleeve moving assembly;
   during tool clamping and unclamping of a stirring sleeve, the stirring sleeve moving assembly is controlled to move within the fourth movement stroke along the axial direction of the stirring sleeve moving assembly.

10. The control mechanism according to claim 1, wherein a pressure stabilizer is provided in the control mechanism, and the pressure stabilizer is a hydraulic stabilizer or a pneumatic stabilizer.

11. The control mechanism according to claim 1, wherein the driving cylinder is a pneumatic driving cylinder or a hydraulic driving cylinder, and the actuating cylinder is a pneumatic actuating cylinder or a hydraulic actuating cylinder.

12. A spindle system, comprising a spindle body, at least one moving component connected to the spindle body, and at least one control mechanism connected to the spindle body, wherein the control mechanism includes a driving component, a pipeline, and an actuating component, the driving component forms a sealed circuit with the actuating component via the pipeline, and the sealed circuit is filled with a filling medium; the driving component includes a driving cylinder and a first piston, the actuating component includes an actuating cylinder and a second piston, and the actuating cylinder is connected to the at least one moving component;

movement of the first piston along an axis of the driving cylinder causes a change of a volume of the filling medium within the driving cylinder, and further causes a change of a volume of the filling medium within the actuating cylinder via the sealed circuit; and

the change of the volume of the filling medium within the actuating cylinder drives the second piston to move along an axis of the actuating cylinder, and further drives the at least one moving component to move, each of the at least one moving component including at least two movement strokes, wherein different movement strokes correspond to different actuating actions.

13. The spindle system according to claim 12, wherein the control mechanism further includes a power component, the driving component is connected to the power component, and the power component drives the first piston to move along the axis of the driving cylinder.

14. The spindle system according to claim 13, wherein the power component includes a drive motor connected to the driving cylinder, and the first piston moves along the axis of the driving cylinder under a driving force of the drive motor.

15. The spindle system according to claim 14, wherein the power component further include a speed reducer and an electric cylinder, an output end of the drive motor is connected to an input end of the speed reducer, an output end of the speed reducer is connected to an input end of the electric cylinder, and an output end of the electric cylinder is connected to the first piston, to drive the first piston to move along the axis of the driving cylinder.

16. The spindle system according to claim 13, wherein

the at least one control mechanism includes a stirring pin control mechanism, the stirring pin control mechanism includes a first power component, a first driving component, a first pipeline, and a first actuating component, wherein the first driving component forms a first sealed circuit with the first actuating component via the first pipeline;

the at least one moving component includes a stirring pin moving assembly, and an actuating cylinder of the first actuating component is connected to the stirring pin moving assembly;

the first driving component is connected to the first power component, and the first power component drives a first piston of the first driving component to move along an axis of a driving cylinder of the first driving component;

movement of the first piston of the first driving component along the axis of the driving cylinder of the first driving component causes a change of a volume of a filling medium within the driving cylinder of the first driving component, and further causes a change of a volume of the filling medium within the actuating cylinder of the first actuating component via the first sealed circuit;

the change of the volume of the filling medium within the actuating cylinder of the first actuating component drives a second piston of the first actuating component to move along an axis of the actuating cylinder of the first actuating component, and further drives the stirring pin moving assembly to move, the stirring pin moving assembly including at least two movement strokes, wherein different movement strokes correspond to different actuating actions.

17. The spindle system according to claim 16, wherein the stirring pin moving assembly includes a first movement stroke and a second movement stroke, the first movement stroke and the second movement stroke do not overlap;

during welding, the stirring pin moving assembly is controlled to move within the first movement stroke along an axial direction of the stirring pin moving assembly;

during tool clamping and unclamping of a stirring pin, the stirring pin moving assembly is controlled to move within the second movement stroke along the axial direction of the stirring pin moving assembly.

18. The spindle system according to claim 13, wherein:

the at least one control mechanism includes a stirring sleeve control mechanism, the stirring sleeve control mechanism includes a second power component, a second driving component, a second pipeline, and a second actuating component, wherein the second driving component forms a second sealed circuit with the second actuating component via the second pipeline;
the at least one moving component includes a stirring sleeve moving assembly, and an actuating cylinder of the second actuating component is connected to the stirring sleeve moving assembly;
the second driving component is connected to the second power component, and the second power component drives a first piston of the second driving component to move along an axis of a driving cylinder of the second driving component;
movement of the first piston of the second driving component along the axis of the driving cylinder of the second driving component causes a change of a volume of a filling medium within the driving cylinder of the second driving component, and further causes a change of a volume of the filling medium within the actuating cylinder of the second actuating component via the second sealed circuit;
the change of the volume of the filling medium within the actuating cylinder of the second actuating component drives a second piston of the second actuating component to move along an axis of the actuating cylinder of the second actuating component, and further drives the stirring sleeve moving assembly to move, the stirring sleeve moving assembly including at least two movement strokes, wherein different movement strokes correspond to different actuating actions.

19. The spindle system according to claim 18, wherein the stirring sleeve moving assembly includes a third movement stroke and a fourth movement stroke, the third movement stroke and the fourth movement stroke do not overlap;

during welding, the stirring sleeve moving assembly is controlled to move within the third movement stroke along an axial direction of the stirring sleeve moving assembly;
during tool clamping and unclamping of a stirring sleeve, the stirring sleeve moving assembly is controlled to move within the fourth movement stroke along the axial direction of the stirring sleeve moving assembly.

20. The spindle system according to claim 12, wherein a pressure stabilizer is provided in the control mechanism, and the pressure stabilizer is a hydraulic stabilizer or a pneumatic stabilizer.

21. The spindle system according to claim 12, wherein the driving cylinder is a pneumatic driving cylinder or a hydraulic driving cylinder, and the actuating cylinder is a pneumatic actuating cylinder or a hydraulic actuating cylinder.

22. A spot welding apparatus, comprising a spindle body and a hybrid drive mechanism, wherein

a compression sleeve mechanism is disposed on the spindle body, a stirring sleeve mechanism is disposed inside the compression sleeve mechanism, and a stirring pin mechanism is disposed inside the stirring sleeve mechanism;
the hybrid drive mechanism includes a stirring pin control mechanism drivingly connected to the stirring pin mechanism and a stirring sleeve control mechanism drivingly connected to the stirring sleeve mechanism, and the stirring pin control mechanism and the stirring sleeve control mechanism are configured to correspondingly drive the stirring pin mechanism and the stirring sleeve mechanism to perform axial movement along an axis of the spindle body;
wherein the stirring pin mechanism includes a first tool changing component, and when the stirring pin mechanism performs the axial movement, a tool clamping action and a tool unclamping action of a stirring pin are automatically performed under an action of the first tool changing component; the stirring sleeve mechanism includes a second tool changing component, and when the stirring sleeve mechanism performs the axial movement, a tool clamping action and a tool unclamping action of a stirring sleeve are automatically performed under an action of the second tool changing component; the compression sleeve mechanism includes a third tool changing component, and the third tool changing component is configured to automatically perform a tool clamping action and a tool unclamping action of a compression sleeve.

23. The spot welding apparatus according to claim 22, wherein the stirring pin mechanism includes a first bearing and a first module housing;

a first spindle is mounted on an inner ring of the first bearing, a first connecting rod extends through an interior of the first spindle along a central axis of the first spindle, a lower end of the first connecting rod is connected to a first tool holder via a pull claw, and the stirring pin is connected to a lower end of the first tool holder; and

the first spindle, the first connecting rod, the pull claw, the first tool holder, and the stirring pin form a stirring pin moving assembly.

24. The spot welding apparatus according to claim 23, wherein the stirring pin control mechanism includes a first power component, a first driving component, a first pipeline, and a first actuating component, wherein the first driving component forms a first sealed circuit with the first actuating component via the first pipeline, and the first sealed circuit is filled with a filling medium; the first driving component includes a driving cylinder and a first piston, and the first actuating component includes an actuating cylinder and a second piston;

the first actuating component is disposed between the first bearing and the first module housing, and the actuating cylinder of the first actuating component is connected to the stirring pin moving assembly;
the first driving component is connected to the first power component, and the first power component drives the first piston of the first driving component to move along an axis of the driving cylinder of the first driving component;
movement of the first piston of the first driving component along the axis of the driving cylinder of the first driving component causes a change of a volume of the filling medium within the driving cylinder of the first driving component, and further causes a change of a volume of the filling medium within the actuating cylinder of the first actuating component via the first sealed circuit; and
the change of the volume of the filling medium within the actuating cylinder of the first actuating component drives the second piston of the first actuating component to move along an axis of the actuating cylinder of the first actuating component, and further drives the stirring pin moving assembly to move along an axial direction of the spindle body.

25. The spot welding apparatus according to claim 24, wherein,
by controlling a movement position of the second piston of the first actuating component, the stirring pin mechanism is caused to perform an axial action during welding or an axial action during tool clamping and unclamping, including:

the second piston of the first actuating component is controlled to move within a first movement stroke, to cause the stirring pin mechanism to perform the axial action during the welding; the second piston of the first actuating component is controlled to move within a second movement stroke, to cause the stirring pin mechanism to perform the axial action during the tool clamping and unclamping; wherein the first movement stroke and the second movement stroke do not overlap.

26. The spot welding apparatus according to claim 23, wherein the first tool changing component includes a first spring assembly and a first limit assembly; the first spring assembly is sleeved over the first connecting rod and located inside the first spindle, two ends of the first spring assembly are fixedly connected to the first spindle and the first connecting rod, respectively; the first limit assembly is disposed above the first connecting rod and is spaced apart from the first connecting rod by a movable distance; during the tool clamping and unclamping of the stirring pin, the stirring pin moving assembly is controlled to move upward along an axial direction of the spindle body; after a top end of the first connecting rod contacts the first limit assembly, the first connecting rod and the pull claw cease to move further upward along the axial direction, while the first spindle continues to move upward along the axial direction, causing the first connecting rod and the pull claw to move downward relative to the first spindle along the axial direction, a lower end of the first spring assembly moves toward an upper end of the first spring assembly, compressing the first spring assembly and causing the pull claw to open and the first tool holder to be disengage from the pull claw, thereby accomplishing the tool unclamping action; after a new stirring pin is in position and the stirring pin moving assembly moves downward along the axial direction, the lower end of the first spring assembly moves in a direction away from the upper end of the first spring assembly, stretching the first spring assembly and causing the pull claw to close, thereby accomplishing the tool clamping action.

27. The spot welding apparatus according to claim 24, wherein the first power component includes a first drive motor, the first drive motor is connected to the driving cylinder of the first driving component, and the first piston of the first driving component moves along the axis of the driving cylinder of the first driving component under a driving force of the first drive motor.

28. The spot welding apparatus according to claim 27, wherein the first power component further includes a first speed reducer and a first electric cylinder; an input end of the first speed reducer is connected to an output end of the first drive motor, an input end of the first electric cylinder is connected to an output end of the first speed reducer, and the first piston of the first driving component is connected to an output end of the first electric cylinder, to drive the first piston of the first driving component to move along the axis of the driving cylinder of the first driving component.

29. The spot welding apparatus according to claim 22, wherein the stirring sleeve mechanism includes a second bearing and a second module housing;

a second spindle is mounted on an inner ring of the second bearing, the second spindle is disposed outside the first spindle, an upper end of the second spindle is provided with a second connecting rod and a lower end of the second spindle is connected to a second tool holder via a first support assembly, a stirring sleeve is connected to a lower end of the second tool holder, and the stirring pin extends through the stirring sleeve;

the second spindle, the second connecting rod, the second tool holder, the stirring sleeve, and the first support assembly form a stirring sleeve moving assembly.

30. The spot welding apparatus according to claim 29, wherein the stirring sleeve control mechanism includes a second power component, a second driving component, a second pipeline, and a second actuating component, wherein the second driving component forms a second sealed circuit with the second actuating component via the second pipeline, and the second sealed circuit is filled with a filling medium; the second driving component includes a driving cylinder and a first piston, and the second actuating component includes an actuating cylinder and a second piston;

the second actuating component is disposed between the second bearing and the second module housing, and an actuating cylinder of the second actuating component is connected to the stirring sleeve moving assembly;

the second driving component is connected to the second power component, and the second power component drives the first piston of the second driving component to move along an axis of the driving cylinder of the second driving component;

movement of the first piston of the second driving component along the axis of the driving cylinder of the second driving component causes a change of a volume of the filling medium within the driving cylinder of the second driving component, and further causes a change of a volume of the filling medium within the actuating cylinder of the second actuating component via the second sealed circuit;

the change of the volume of the filling medium within the actuating cylinder of the second actuating component drives the second piston of the second actuating component to move along an axis of the actuating cylinder of the second actuating component, and further drives the stirring sleeve moving assembly to move along an axial direction of the spindle body.

31. The spot welding apparatus according to claim 30, wherein,

by controlling a movement position of the second piston of the second actuating component, the stirring sleeve mechanism is caused to perform an axial action during welding or an axial action during tool clamping and unclamping, including:

the second piston of the second actuating component is controlled to move within a third movement stroke, to cause the stirring sleeve mechanism to perform the axial action during the welding;

the second piston of the second actuating component is controlled to move within a fourth movement stroke, to cause the stirring sleeve mechanism to perform the axial action during the tool clamping and unclamping; wherein the third movement stroke and the fourth movement stroke do not overlap.

32. The spot welding apparatus according to claim 29, wherein the second tool changing component includes a second spring assembly and a second limit assembly; the second spring assembly is sleeved over the second spindle, and a lower end of the second spring assembly is connected to the second spindle; the second limit assembly is disposed above the second connecting rod;

during tool clamping and unclamping of the stirring sleeve, the stirring sleeve moving assembly is controlled to move upward along an axial direction of the spindle body; after a top end of the second connecting rod contacts the second limit assembly, the second connecting rod and the first support assembly cease to move further upward along the axial direction, while the second spindle continues to move upward along the axial direction, causing the second connecting rod and the first support assembly to move downward relative to the second spindle along the axial direction, a lower end of the second spring assembly moves toward an upper end of the second spring assembly, compressing the second spring assembly and causing the first support assembly to release and the second tool holder to be disengage from the first support assembly, thereby accomplishing the tool unclamping action; after a new stirring sleeve is in position and the stirring sleeve moving assembly moves downward along the axial direction, the lower end of the second spring assembly moves in a direction away from the upper end of the second spring assembly, stretching the second spring assembly and causing the first support assembly to close, thereby accomplishing the tool clamping action.

33. The spot welding apparatus according to claim 30, wherein the second power component includes a second drive motor, the second drive motor is connected to the driving cylinder of the second driving component, and the first piston of the second driving component moves along the axis of the driving cylinder of the second driving component under a driving force of the second drive motor.

34. The spot welding apparatus according to claim 33, wherein the second power component further includes a second speed reducer and a second electric cylinder; an input end of the second speed reducer is connected to an output end of the second drive motor, an input end of the second electric cylinder is connected to an output end of the second speed reducer, and the first piston of the second driving component is connected to an output end of the second electric cylinder, to drive the first piston of the second driving component to move along the axis of the driving cylinder of the second driving component.

35. The spot welding apparatus according to claim 22, wherein a pressure stabilizer is provided in the stirring pin control mechanism and/or the stirring sleeve control mechanism, and the pressure stabilizer is a hydraulic stabilizer or a pneumatic stabilizer.

36. The spot welding apparatus according to claim 24 or 30, wherein the driving cylinder is a pneumatic driving cylinder or a hydraulic driving cylinder, and the actuating cylinder is a pneumatic actuating cylinder or a hydraulic actuating cylinder.

37. The spot welding apparatus according to claim 29, wherein the compression sleeve mechanism includes a third module housing, the third module housing being connected to the second module housing; the third tool changing component is disposed inside the third module housing and includes a second support assembly, a lower end of the second support assembly is provided with a third tool holder, a lower end of the third tool holder is connected to a compression sleeve, and the compression sleeve is sleeved over the stirring sleeve; during tool clamping and unclamping of the compression sleeve, the second support assembly is controlled to move to cause the second support assembly to release and the third tool holder to disengage from the second support assembly, thereby accomplishing the tool unclamping action; after a new compression sleeve is in position, the second support assembly resets and engages the third tool holder, thereby accomplishing the tool clamping action.

38. The spot welding apparatus according to claim 37, wherein the third tool changing component accomplishes the tool clamping and unclamping of the compression sleeve via a pneumatic circuit or a hydraulic circuit.

39. The spot welding apparatus according to claim 38, wherein a first medium inlet and a second medium inlet are mounted on an exterior of the spindle body; the first medium inlet and the second medium inlet are configured to control the tool unclamping action and the tool clamping action of the third tool changing component, respectively.

40. The spot welding apparatus according to claim 22, wherein a first interface and a second interface are mounted on an exterior of the spindle body; the first interface and the second interface are respectively configured to control an axial action during welding or an axial action during tool clamping and unclamping performed by the stirring pin mechanism and the stirring sleeve mechanism.

41. The spot welding apparatus according to claim 22, further comprising a robotic arm and a media supply manifold, the spindle body and the hybrid drive mechanism are mounted on the robotic arm, and the media supply manifold includes a pneumatic supply pipeline and/or a hydraulic supply pipeline.

42. The spot welding apparatus according to claim 22, wherein a first temperature sensor is provided in the stirring pin mechanism, and/or a second temperature sensor is provided in the stirring sleeve mechanism; a thermal imaging component is provided on the spindle body; the spot welding apparatus further comprises a control host, wherein the first temperature sensor, the second temperature sensor, and the thermal imaging component are in communication connection with the control host; the control host is configured to: adjust a welding parameter of the spot welding apparatus based on temperature data collected by the first temperature sensor and/or the second temperature sensor and thermal imaging data collected by the thermal imaging component, wherein the welding parameter includes a rotational speed of the stirring pin and/or a rotational speed of the stirring sleeve.

**43.** The spot welding apparatus according to claim 42, wherein the control host is further configured to:

determine a heating characteristic based on the thermal imaging data;
in response to the heating characteristic failing to meet a preset condition, adjust the welding parameter.

**44.** The spot welding apparatus according to claim 43, wherein the control host is further configured to: determine an adjusted welding parameter via a first determination model based on the temperature data, the heating characteristic, a material type of a workpiece to be welded, and a target temperature, wherein the first determination model is a machine learning model.

**45.** The spot welding apparatus according to claim 42, wherein a refrigeration component is further provided on the spindle body, the refrigeration component is in communication connection with the control host, and the control host is further configured to: in response to the heating characteristic failing to meet a preset condition, determine a refrigeration parameter, and control, based on the refrigeration parameter, the refrigeration component to perform temperature regulation.

**46.** The spot welding apparatus according to claim 45, wherein the control host is further configured to: determine the refrigeration parameter via a second determination model based on the welding parameter, the temperature data, the heating characteristic, the material type of the workpiece to be welded, and the target temperature, wherein the second determination model is a machine learning model.

**47.** The spot welding apparatus according to claim 22, further comprising a warning component and a pressure sensor, wherein the pressure sensor is disposed within a first pipeline and/or a second pipeline; the spot welding apparatus further comprises a control host, wherein the warning component and the pressure sensor are in communication connection with the control host; the control host is configured to:

determine a rate of change of circuit pressure based on a hydraulic circuit pressure detection sequence acquired by the pressure sensor; and
in response to the rate of change being greater than a first rate-of-change threshold, generate a control instruction for a replenishment warning and send the control instruction to the warning component, to control the warning component to issue the replenishment warning.

**48.** The spot welding apparatus according to claim 47, wherein the control host is further configured to:

in response to the rate of change being greater than a second rate-of-change threshold, determine a component failure probability;
in response to the component failure probability being greater than a probability threshold, generate a control instruction for a failure warning and send the control instruction to the warning component, to control the warning component to issue the failure warning.

**49.** The spot welding apparatus according to claim 22, further comprising a voiceprint sensor, wherein the voiceprint sensor is disposed on the spindle body; the spot welding apparatus further comprises a control host, wherein the voiceprint sensor is in communication connection with the control host; the control host is configured to: determine a failure probability distribution of the spot welding apparatus based on sound data collected by the voiceprint sensor, wherein the failure probability distribution includes a failure probability of at least one component within the spot welding apparatus.

**50.** The spot welding apparatus according to claim 49, wherein the control host is further configured to: determine the failure probability distribution based on the sound data and a welding tool state corresponding to a sound signal in each time interval within the sound data.

**51.** The spot welding apparatus according to claim 49, wherein the voiceprint sensor is disposed near a first interface and/or a second interface; the control host is further configured to: determine a circuit failure probability based on circuit sound data collected by the voiceprint sensor and a circuit feature, wherein the circuit feature includes at least one of a rate of change of circuit pressure or a setting position of the pressure sensor.

**52.** The spot welding apparatus according to claim 22, further comprising a position sensor, wherein the position sensor is disposed in at least one of the stirring pin mechanism, the stirring sleeve mechanism, or the compression sleeve mechanism; the spot welding apparatus further comprises a control host, wherein the position sensor is in communication connection with the control host; the control host is configured to:

determine a welding tool position based on sensing data collected by the position sensor;
determine a welding tool installation status based on the welding tool position; and
in response to the welding tool installation status being a loose state, control the spindle body to stop rotating and issue a warning message.

**FIG. 1**

**FIG. 2**

**400**

512
510
511

610 {
612
611
}

600 {
620
324
630
640
650
660
}

621

700 {
710
720
730
740
}

**FIG. 3**

**FIG. 4**

**FIG. 5**

**400**

**FIG. 6**

**FIG. 7**

**FIG. 8**

## INTERNATIONAL SEARCH REPORT

| International application No. |
| --- |
| **PCT/CN2024/123805** |

| A. | CLASSIFICATION OF SUBJECT MATTER |
| --- | --- |

B23K20/12(2006.01)i; B23K20/26(2006.01)i

According to International Patent Classification (IPC) or to both national classification and IPC

| B. | FIELDS SEARCHED |
| --- | --- |

Minimum documentation searched (classification system followed by classification symbols)

IPC: B23K

Documentation searched other than minimum documentation to the extent that such documents are included in the fields searched

Electronic data base consulted during the international search (name of data base and, where practicable, search terms used)

CNTXT, VEN, ENTXT: 搅拌摩擦, 点焊, 主轴, 搅拌针, 搅拌头, 搅拌套, 轴肩, 压紧套, 更换, 换刀, 替换, 控制, 液压, 缸, 活塞, 驱动, 执行, 轴向, 运动, 动作, 移动, 位移, friction stir weld+, spot weld+, shaft, spindle, probe, pin, tool, head, sleeve, shoulder, press+, chang+, substitut+, replac+, control+, hydraulic, cylinder, actuator, piston, driv+, execut+, axial, movement, displacement

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117047259 A (ANHUI WORLD WIDE WELDING CO., LTD.) 14 November 2023 (2023-11-14) <br> description, paragraphs [0025]-[0044], claims 1-12, and figures 1-8 | 1-41 |
| PX | CN 221064802 U (ANHUI WORLD WIDE WELDING CO., LTD.) 04 June 2024 (2024-06-04) <br> description, paragraphs [0021]-[0029], and figures 1-3 | 1-6, 8, 11-16, 18, 21 |
| X | CN 113231730 A (SHANGHAI-FANUC ROBOTICS CO., LTD.) 10 August 2021 (2021-08-10) <br> description, paragraphs [0028]-[0036], and figures 1-3 | 1-6, 8, 10-16, 18, 20-24, 27-30, 33-52 |
| A | CN 116197517 A (ANHUI WORLD WIDE WELDING CO., LTD.) 02 June 2023 (2023-06-02) <br> entire document | 1-52 |
| A | CN 103350278 A (TIANJIN UNIVERSITY) 16 October 2013 (2013-10-16) <br> entire document | 1-52 |

| ✓ Further documents are listed in the continuation of Box C. | ✓ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **13 December 2024** | **02 January 2025** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/123805** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 113492256 A (TIANJIN YIPU TECHNOLOGY DEVELOPMENT CO., LTD.) 12 October 2021 (2021-10-12)<br>entire document | 1-52 |
| A | CN 115464248 A (AVIC MANUFACTURING TECHNOLOGY INSTITUTE) 13 December 2022 (2022-12-13)<br>entire document | 1-52 |
| A | CN 115945775 A (ANHUI WORLD WIDE WELDING CO., LTD.) 11 April 2023 (2023-04-11)<br>entire document | 1-52 |
| A | US 2003183673 A1 (MTS SYSTEMS CORP.) 02 October 2003 (2003-10-02)<br>entire document | 1-52 |

Form PCT/ISA/210 (second sheet) (July 2022)

## INTERNATIONAL SEARCH REPORT
### Information on patent family members

| International application No. |
| --- |
| **PCT/CN2024/123805** |

| Patent document cited in search report | | | Publication date (day/month/year) | Patent family member(s) | | | Publication date (day/month/year) |
| --- | --- | --- | --- | --- | --- | --- | --- |
| CN | 117047259 | A | 14 November 2023 | CN | 117047259 | B | 13 February 2024 |
| CN | 221064802 | U | 04 June 2024 | None | | | |
| CN | 113231730 | A | 10 August 2021 | None | | | |
| CN | 116197517 | A | 02 June 2023 | None | | | |
| CN | 103350278 | A | 16 October 2013 | CN | 103350278 | B | 22 April 2015 |
| CN | 113492256 | A | 12 October 2021 | None | | | |
| CN | 115464248 | A | 13 December 2022 | CN | 115464248 | B | 29 December 2023 |
| CN | 115945775 | A | 11 April 2023 | None | | | |
| US | 2003183673 | A1 | 02 October 2003 | DK | 1494831 | T3 | 21 February 2011 |
| | | | | AU | 2003226158 | A1 | 20 October 2003 |
| | | | | WO | 03084707 | A1 | 16 October 2003 |
| | | | | ES | 2356236 | T3 | 06 April 2011 |
| | | | | ATE | 489192 | T1 | 15 December 2010 |
| | | | | EP | 1494831 | A1 | 12 January 2005 |
| | | | | EP | 1494831 | B1 | 24 November 2010 |
| | | | | DE | 60335091 | D1 | 05 January 2011 |
| | | | | US | 6732900 | B2 | 11 May 2004 |
| | | | | JP | 2005521561 | A | 21 July 2005 |
| | | | | JP | 4464141 | B2 | 19 May 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202322723339
- CN 202311308000
- CN 105364298 A
- CN 108817641 A
- CN 108857044 A
- CN 114273772A
- CN 105665917 A
- CN 108213690 A
- CN 111069762 A
- CN 111069763 A
- CN 107511583 A
- CN 109202264 A
- CN 206405600 U